(19) Europäisches Patentamt
European Patent Office
Office européen des brevets

(11) Veröffentlichungsnummer: **0 319 864 B1**

(12) # EUROPÄISCHE PATENTSCHRIFT

(45) Veröffentlichungstag der Patentschrift: **17.03.93**

(51) Int. Cl.⁵: **C08K 5/17**, C08L 33/06, C09D 133/08, C08F 8/32

(21) Anmeldenummer: **88120197.4**

(22) Anmeldetag: **03.12.88**

(54) **Bindemittelkombinationen, ein Verfahren zu ihrer Herstellung und ihre Verwendung.**

(30) Priorität: **11.12.87 DE 3742123**

(43) Veröffentlichungstag der Anmeldung:
**14.06.89 Patentblatt 89/24**

(45) Bekanntmachung des Hinweises auf die Patenterteilung:
**17.03.93 Patentblatt 93/11**

(84) Benannte Vertragsstaaten:
**AT BE CH DE ES FR GB IT LI NL SE**

(56) Entgegenhaltungen:
**EP-A- 0 240 083**

(73) Patentinhaber: **BAYER AG**

**W-5090 Leverkusen 1 Bayerwerk(DE)**

(72) Erfinder: **Blum, Harald, Dr.**
**Auf dem Westkamp 1**
**W-4175 Wachtendonk 1(DE)**
Erfinder: **Pedain, Josef, Dr.**
**Haferkamp 6**
**W-5000 Koeln 80(DE)**
Erfinder: **Wamprecht, Christian, Dr.**
**Wilhelmstrasse 100**
**W-4150 Krefeld 1(DE)**

**EP 0 319 864 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft unter dem Einfluß von Feuchtigkeit aushärtbare Bindemittelkombinationen, bestehend im wesentlichen aus Anhydrid- und Epoxygruppen enthaltenden Copolymerisaten sowie Verbindungen, welche zur Vernetzung mit den Copolymerisaten geeignet sind und im wesentlichen Aminogruppen in blockierter Form aufweisen, ein Verfahren zur Herstellung dieser Bindemittelkombinationen und ihre Verwendung als Bindemittel in Beschichtungsmitteln und Dichtmassen.

Die Verwendung von Kombinationen aus organischen Verbindungen mit mindestens zwei intramolekularen Carbonsäureanhydridgruppen pro Molekül, insbesondere von bernsteinsäureanhydridhaltigen Copolymerisaten und Polyhydroxylverbindungen als Bindemittel für Lacke und Beschichtungsmassen ist aus der EP-A-48 128 bereits bekannt. Der Gedanke, das Prinzip dieser Veröffentlichung auf die Umsetzung von Aminen mit Anhydriden zu übertragen, scheitert jedoch an der Tatsache, daß die Umsetzung von Aminen mit Anhydriden eine bereits bei Raumtemperatur sehr rasch ablaufende Reaktion darstellt, die unter Anhydridspaltung zu vernetzten Produktion führt. Die daraus resultierenden extrem kurzen Standzeiten verhindern bisher die gemeinsame Verwendung von Polyanhydriden und Polyaminen in Beschichtungssystemen.

Eine Lösungsmöglichkeit wird in der DE-OS 2 853 477 aufgezeigt. Dort werden Mischungen aus blockierten Polyaminen und aus Polyanhydriden beschrieben, die gute Standzeiten aufweisen, jedoch bei Zugabe von Wasser zu vernetzten Produkten aushärten. Als geeignete blockierte Polyamine werden Ketimine bzw. Aldimine beschrieben, die durch Umsetzung von Polyaminen mit Ketonen bzw. Aldehyden erhalten werden.

Als Polyanhydride werden Verbindungen mit wenigstens zwei cyclischen Carbonsäureanhydridgruppen im Molekül, insbesondere Umsetzungsprodukte von Polyolen mit cyclischen Dianhydriden bei einem Hydroxyl-Anhydridgruppenverhältnis von 1:2, oder Copolymerisate eines ungesättigten cyclischen Anhydrids mit mehrfach ungesättigten Verbindungen oder $\alpha$-Olefinen genannt.

Die bei der Herstellung der Copolymerisate einzusetzenden olefinisch ungesättigten Verbindungen werden in der allgemeinen Beschreibung der DE-OS 2 853 477 nur sehr pauschal abgehandelt, insbesondere fehlt jeglicher Hinweis bezüglich der Mengenverhältnisse der einzelnen Monomeren, die bei der Herstellung der Copolymerisate zum Einsatz gelangen sollen. Die konkrete Offenbarung der Ausführungsbeispiele beschränkt sich auf Copolymerisate aus Butadienöl und Maleinsäureanhydrid im Verhältnis 1:1 und auf Copolymerisate von Holzöl mit Maleinsäureanhydrid. Diese Copolymerisate sind jedoch mit Nachteilen behaftet, da ihre Kombination mit Bisketiminen bzw. Bisaldiminen letztendlich zu stark verfärbten Produkten führt. Im übrigen führen Beschichtungsmittel, die als Bindemittelkomponente ungesättigte Öle wie Butadienöl oder Holzöl enthalten, zu Überzügen, die leicht zur Versprödung neigen und nicht wetterbeständig sind.

Außerdem muß, wie den Ausführungsbeispielen der DE-OS 2 853 477 zu entnehmen, bei der Verarbeitung der dort konkret beschriebenen Bindemittel Dimethylformamid als Lösungsmittel eingesetzt werden, wobei außerdem nicht akzeptable Feststoffgehalte von lediglich ca. 20 % zur Anwendung gelangen.

Eine weitere Möglichkeit, die Standzeiten zu verlängern, besteht in der Verwendung von Oxazolanen anstelle der Amine.

Wasserhärtbare Zusammensetzungen aus Oxazolanen und Polyanhydriden sind im Prinzip aus der DE-OS 2 610 406 bekannt. Dort werden Oxazolane mit Polyanhydriden für wasserhärtbare Dicht- und Klebstoffmassen kombiniert.

Als geeignete Polyanhydride werden Umsetzungsprodukte von mehrfach ungesättigten Fettsäuren mit Maleinsäureanhydrid und Polyanhydride aus $C_3$-$C_6$-Alkyl-(meth)acrylat und Maleinsäureanhydrid, insbesondere aus Butylacrylat und Maleinsäureanhydrid, beschrieben.

Die in der DE-OS 2 610 406 konkret beschriebenen Systeme sind bezüglich ihrer Eignung zur Herstellung hochwertiger, farbloser Lackfilme hoher Härte und guter Lösungsmittel- und Chemikalienbeständigkeit noch stark verbesserungsbedürftig. Dies gilt sowohl für die in den Ausführungsbeispielen beschriebenen Systeme auf Basis von Copolymerisaten aus Maleinsäureanhydrid und Butylacrylat als auch für die Systeme auf Basis von Umsetzungsprodukten von Maleinsäureanhydrid mit mehrfach ungesättigten Fettsäureestern, die zu vergilbenden Endprodukten führen.

Die Verwendung von epoxyfunktionellen Verbindungen in Kombination mit Polyaminen für Lacke und Beschichtungssysteme ist z.B. aus den EP-A-179 954 bzw. 183 463 bekannt.

Die Reaktivität solcher Bindemittelkombinationen ist jedoch verbesserungsbedürftig. Insbesondere bei der Aushärtung bei Raumtemperatur ist auch bei Zugabe ausgewählter Katalysatorsysteme die Vernetzung noch nicht ausreichend oder erfordert zumindest sehr lange Reaktionszeiten.

In der DE-OS 3 534 910 werden härtbare Zusammensetzungen aus löslichen, hydroxylfunktionellen Acrylatcopolymerisaten, Verbindungen mit mindestens zwei cyclischen Anhydridgruppen pro Molekül und Verbindungen mit mindestens zwei Epoxidgruppen pro Molekül beschrieben. Verbindungen, welche gleichzeitig Epoxid- und Anhydridgruppen enthalten, werden ebensowenig wie aminofunktionelle Vernetzer offenbart.

In der EP-A-225 097 werden Überzugskompositionen aus anhydridfunktionellen Copolymerisaten und aus mindestens difunktionellen Epoxiden unter Mitverwendung von Katalysatoren beschrieben. Auch in dieser Veröffentlichung werden keine Verbindungen beschrieben, die gleichzeitig Epoxid- und Anhydridgruppen enthalten, ebenso werden aminofunktionellen Vernetzern nicht beschrieben.

Es war die der Erfindung zugrundeliegende Aufgabe, neue Bindemittelkombinationen zur Verfügung zu stellen, die zur Herstellung von hochwertigen, gegebenenfalls unter dem Einfluß von Luftfeuchtigkeit aushärtenden Systemen mit ausreichender Standzeit geeignet sind. Die erhaltenen Überzüge sollen klar, farblos, vergilbungsbeständig und lösungsmittelfest sein.

Diese Aufgabe konnte durch die Bereitstellung der nachstehend näher beschriebenen Bindemittelkombinationen gelöst werden.

In den erfindungsgemäßen Bindemittelkombinationen liegen als Komponente A) Copolymerisate vor, die gleichzeitig Anhydrid- und Epoxidgruppen in chemisch eingebauter Form enthalten. Die Härtekomponente B) besteht ihrerseits aus, unter dem Einfluß von Feuchtigkeit aktivierbare, blockierte Aminogruppen aufweisenden, Verbindungen.

Der besondere Vorteil dieser Bindemittelkombinationen liegt darin, daß sie nach einem "double-cure" Mechanismus aushärten können. Zunächst reagieren Anhydridgruppen und Epoxygruppen mit den aminofunktionellen Vernetzern, anschließend können die bei der Reaktion von Anhydrid und Amin resultierenden Carboxylgruppen mit überschüssigen Epoxygruppen abreagieren, so daß die Zahl der freien Carboxylgruppen in Überzug reduziert wird und hohe Vernetzungsdichten erzielt werden und somit auch hohe Anforderungen bezüglich Lösemittel- und Chemikalienfestigkeit erfüllt werden können.

Gegenstand der Erfindung sind unter dem Einfluß von Feuchtigkeit aushärtbare Bindemittelkombinationen enthaltend

A) 30 bis 99 Gew.-Teile einer Copolymerisat-Komponente, bestehend aus mindestens einem Copolymerisat von olefinisch ungesättigten Verbindungen mit einem als Gewichtsmittel bestimmten Molekulargewicht von 1,500 bis 75,000, welches gegenüber Aminogruppen im Sinne einer Additionsreaktion reaktionsfähige Gruppen chemisch eingebaut enthält,

und

B) 1 bis 70 Gew.-Teile einer Polyamin-Komponente, bestehend aus mindestens einem organischen Polyamin mit blockierten Aminogruppen,

dadurch gekennzeichnet, daß die Copolymerisate der Komponente A) sowohl intramolekulare Carbonsäureanhydridgruppen als auch Epoxidgruppen in chemisch gebundener Form enthalten, wobei das Anhydridäquivalentgewicht der Copolymerisate bei 392 bis 9.800 und das Epoxidäquivalentgewicht der Copolymerisate bei 568 bis 14,200 liegt, und wobei in den Bindemittelkombinationen auf jede blockierte Aminogruppe insgesamt 0,2 bis 8 Anhydrid- und Epoxidgruppen entfallen.

Gegenstand der Erfindung ist auch ein Verfahren zur Herstellung dieser Bindemittelkombinationen, welches dadurch gekennzeichnet ist, daß man die Komponenten A) und B) und gegebenenfalls die nachstehend näher genannten weiteren Komponenten C), D) und/oder E) miteinander vermischt.

Gegenstand der Erfindung ist schließlich auch die Verwendung der neuen Bindemittelkombinationen als oder in unter dem Einfluß von Feuchtigkeit aushärtbaren Beschichtungsmitteln und Dichtmassen.

Die vorstehend und auch nachstehend genannten Molekulargewichte für die Komponenten A) und B) können nach der Methode der Gelpermeationschromatographie bestimmt (Molekulargewicht über 1.000) bzw. aus der Art und den Mengenverhältnissen der zu Herstellung der genannten Komponenten verwendeten Ausgangsmaterialien berechnet werden (Molekulargewichte unter 1.000).

Die Copolymerisatkomponente A) besteht aus mindestens einem Copolymerisat, welches sowohl Epoxidgruppen als auch intramolekulare Säureanhydridgruppen in copolymerisierter Form aufweist, wobei das als Gewichtsmittel bestimmte Molekulargewicht dieser Copolymerisate bei 1.500 bis 75,000, vorzugsweise 3,000 bis 50,000 und besonders bevorzugt bei 3,000 bis 25,000, liegt. Das Epoxidäquivalentgewicht (= Menge in "g", die 1 Mol Epoxidgruppen enthält) liegt bei 568 bis 14.200, vorzugsweise 973 bis 7,300 und das Anhydridäquivalentgewicht (= Menge in "g", die 1 Mol Anhydridgruppen enthält) liegt bei 392 bis 9,800, vorzugsweise 817 bis 3,270.

Die in der Komponente A) vorliegenden Copolymerisate werden vorzugsweise in Anwesenheit von organischen Lösungsmitteln hergestellt. Als Polymerisationsmedium sind sämtliche in der Lackindustrie gebräuchlichen Lösungsmittel geeignet, die unter den Polymerisationsbedingungen gegenüber den Monomeren und den Copolymerisaten inert sind.

Zur Herstellung der Copolymerisate wird vorzugsweise ein Monomerengemisch verwendet, welches aus

a) 1 bis 25 Gew.-Teilen copolymerisierbaren, Anhydridgruppen enthaltenden Monomeren

b) 1 bis 25 Gew.-Teilen copolymerisierbaren, Epoxygruppen enthaltenden Monomeren

und

c) 50 bis 98 Gew.-Teilen sonstigen copolymerisierbaren Monomeren der allgemeinen Formeln

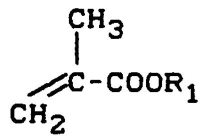 ,
I

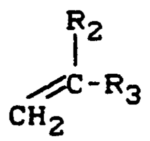 ,
II

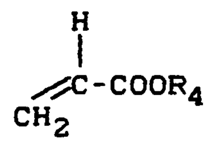 ,
III

besteht, wobei

- $R_1$ für einen linearen oder verzweigten aliphatischen Kohlenwasserstoffrest mit 1 bis 18 Kohlenstoffatomen steht,
- $R_2$ für Wasserstoff, eine Methyl-, Ethyl-, Chlor- oder Fluorgruppe steht,
- $R_3$ für einen aromatischen Kohlenwasserstoffrest mit 6 bis 12 Kohlenstoffatomen (hierunter sollen auch aliphatische Substituenten aufweisende aromatische Reste verstanden werden), eine Nitrilgruppe, eine Carboxylatgruppe mit 2 bis 9 Kohlenstoffatomen, eine Alkoxygruppe mit 2 bis 7 Kohlenstoffatomen oder eine Aminocarbonylgruppe, die gegebenenfalls am Stickstoff gegebenenfalls Etherbrücken aufweisende, Alkylsubstituenten mit 1 bis 6 Kohlenstoffatomen trägt, steht, und
- $R_4$ bezüglich seiner Bedeutung der für $R_1$ gemachten Definition entspricht, mit $R_1$ jedoch nicht identisch zu sein braucht.

Typische Beispiele für Monomere a) sind z.B. Itaconsäureanhydrid, Maleinsäureanhydrid, wobei Maleinsäureanhydrid bevorzugt ist.

Typische Beispiele für Monomere b) sind Glycidylacrylat oder Glycidylmethacrylat.

Unter den Monomeren c) sind insbesondere solche der genannten allgemeinen Formeln bevorzugt, für welche

- $R_1$ für einen linearen oder verzweigten aliphatischen Kohlenwasserstoffrest mit 1 bis 8 Kohlenstoffatomen steht,
- $R_2$ für Wasserstoff oder eine Methylgruppe steht,
- $R_3$ für einen aromatischen Kohlenwasserstoffrest mit 6 bis 12 Kohlenstoffatomen (hierunter sollen auch aliphatische Substituenten aufweisende aromatische Reste verstanden werden), eine Nitrilgruppe, eine Carboxylatgruppe mit 2 bis 9 Kohlenstoffatomen, eine Alkoxygruppe mit 2 bis 7 Kohlenstoffatomen oder eine Aminocarbonylgruppe, die gegebenenfalls am Stickstoff einen, gegebenenfalls Etherbrücken aufweisenden, Alkylsubstituenten mit 1 bis 6 Kohlenstoffatomen trägt, steht, und
- $R_4$ bezüglich seiner Bedeutung der zuletzt für $R_1$ gemachten Definition entspricht.

Typische Beispiele für geeignete bzw. bevorzugte Reste $R_1$ bzw. $R_4$ sind Methyl-, Ethyl-, n-Propyl, Isopropyl-, n-Butyl-, Isobutyl-, n-Pentyl-, n-Hexyl-, 2-Ethylhexyl-, n-Octyl-, n-Decyl- oder n-Dodecylreste.

Typische Beispiele für geeignete bzw. bevorzugte Reste $R_2$ sind Wasserstoff-, Methyl-, Ethyl-, Chlor- oder Fluorreste.

Typische Beispiele für geeignete bzw. bevorzugte Reste $R_3$ sind aliphatische Reste der soeben für $R_1$ beispielhaft genannten Art mit Ausnahme von Wasserstoff und Methyl und außerdem Phenyl-, Cyclohexyl-, 2-, 3- und 4-Methylphenyl-, Propoxy-, n-Butoxy-, Acetyl-, Propionyl-, n-Butyryl- oder N-Methoxymethylaminocarbonyl-Reste.

Besonders bevorzugte Copolymerisat-Komponenten A) sind solche, den obengemachten Angaben entsprechende Copolymerisate, in denen

a) 1 bis 25 Gew.-Teile, insbesondere 3 bis 12 Gew.-Teile Maleinsäureanhydrid,

b) 1 bis 25 Gew.-Teile, insbesondere 2 bis 15 Gew.-Teile Glycidylmethacrylat,

c) 13 bis 85 Gew.-Teile, insbesondere 30 bis 65 Gew.-Teile an Monomeren der Formeln

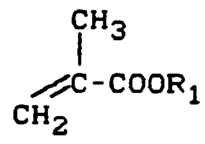

und/oder

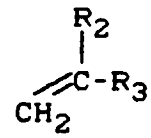

und
10 bis 65 Gew.-Teile, insbesondere 25 bis 50 Gew.-Teile an Monomeren der Formel

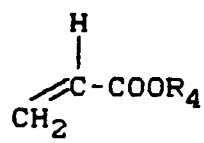

in copolymerisierter Form vorliegen.

Besonders bevorzugt werden als Komponente A) solche der gemachten Definition entsprechende Copolymerisate eingesetzt, in denen pro 100 Gew.-Teile Maleinsäureanhydrid 40 bis 140 Gew.-Teile an anderen Monomeren, ausgewählt aus der Gruppe bestehend aus Styrol, Vinyltoluol, α-Methylstyrol, α-Ethylstyrol, kernsubstituierten, gegebenenfalls Isomerengemische darstellenden Diethylstyrolen, Isopropylstyrolen, Butylstyrolen und Methoxystyrolen, Ethylvinylether, n-Propylvinylether, Isopropylvinylether, n-Butylvinylether, Isobutylvinylether, Vinylacetat, Vinylpropionat, Vinylbutyrat und beliebigen Gemischen dieser Monomeren, in copolymerisierter Form, neben Glycidylmethacrylat und gegebenenfalls neben anderen Comonomeren vorliegen.

Für die Durchführung der Copolymerisation geeignete Lösungsmittel sind beispielsweise Ester wie Ethylacetat, Propylacetat, Butylacetat, Isopropylacetat, Isobutylacetat, sec.-Butylacetat, Amylacetat, Hexylacetat, Benzylacetat, Ethylpropionat, Butylpropionat, Methylglykolacetat, Ethylglykolacetat, Butylglykolacetat, Ethyldiglykolacetat, Ethylglykolacetat, Methyldiglykolacetat, Butyldiglykolacetat, Butyrolacton, Propylenglykolmethyletheracetat, z.B. Ether wie Diisopropylether, Dibutylether, Tetrahydrofuran, Dioxan, Dimethyldiglykol, Kohlenwasserstoffe wie Benzin, Terpentinöl, Solventnaphtha, Terpene, Hexan, Heptan, Octan, Cyclohexan, Toluol, Xylol, Ethylbenzol, Ketone wie Aceton, Methylethylketon, Methylisobutylketon, Methyl-n-amylketon, Methylisoamylketon, Diethylketon, Ethylbutylketon, Diisopropylketon, Cyclohexanon, Methylcyclohexanon, Isophoron oder beliebige Gemischer derartiger und anderer Lösungsmittel.

Die Copolymerisation wird üblicherweise bei Feststoffgehalten von 30 bis 95 Gew.-% durchgeführt.

Im allgemeinen wird ein Teil oder die Gesamtmenge an Lösungsmittel im Reaktionsgefäß vorgelegt und Monomerenmischung, Initiator und gegebenenfalls ein Teil des Lösungsmittels kontinuierlich zudosiert. Nach beendeter Zugabe wird noch einige Zeit nachgerührt. Die Polymerisation wird nach einem Monomerenumsatz von mehr als 96 %, bevorzugt mehr als 99 %, beendet. Gegebenenfalls ist es erforderlich, durch nachträgliche Zugabe von geringen Initiatormengen eine Nachaktivierung vorzunehmen, um den gewünschten Monomerenumsatz zu erreichen. Bei bestimmten Monomerausgangszusammensetzungen ist es möglich, daß nach der Polymerisation größere Mengen an Maleinsäureanhydridrestmonomeren im Copolymerisat enthalten sind. Aus Kostengründen und für den Fall, daß sich dies auf den gewünschten Anwendungszweck, bzw. auf das Eigenschaftsniveau störend auswirken sollte, ist es vorteilhaft, diesen Restmonomerengehalt entweder durch Destillation oder durch Nachaktivieren mit Initiator, gegebenenfalls unter gleichzeitiger Zugabe von geringen Mengen einer gut mit Maleinsäureanhydrid copolymerisierbaren Monomerenmischung, wie z.B. Styrol, Butylacrylat, zu reduzieren.

Es ist auch möglich, einen Teil des Maleinsäureanhydrids mit dem Lösungsmittel vorzulegen, oder das Maleinsäureanhydrid schneller als die anderen Monomeren zuzutropfen. Diese geänderten Herstellverfahren können in gewissen Fällen die Verträglichkeit der Komponenten der Bindemittelkombination verbessern.

Der Monomerenumsatz wird durch eine Bestimmung des Festgehaltes der Reaktionsmischung ermittelt und durch eine gaschromatographische Restmonomerenanalyse überprüft.

Vorzugsweise werden solche Radikalbildner eingesetzt, die für Reaktionstemperaturen von 60 bis 180° C geeignet sind, wie organische Peroxide, z.B.: Dibenzoylperoxid, Di-tert.-butylperoxid, Dilaurylperoxid, tert.-Butylperoxy-2-ethylhexanoat, tert.-Butylperoxymaleinat, tert.-Butylperoxybenzoat, Dicumylperoxid, Didecanoylperoxid, wie Azoverbindungen, z.B. 2,2′-Azobis-(2,4-dimethylvaleronitril),2,2′-Azobis-(isobutyronitril), 2 ,2′-Azobis-(2,3-dimethylbutyronitril), 1,1′-Azobis-(1-cyclohexannitril).

Die Initiatoren können in Mengen von 0,5 bis 12 Gew.-%, bezogen auf Gesamtmonomere, eingesetzt werden. Gegebenenfalls können molekulargewichtsregelnde Substanzen, wie n-Dodecylmercaptan, tert.-Dodecylmercaptan usw. in Mengen von 0 bis 3 Gew.-% eingesetzt werden.

Die Härtekomponente B) besteht aus mindestens einer Verbindung mit, unter dem Einfluß von Feuchtigkeit aktivierbaren, blockierten Aminogruppen, ausgewählt aus der Gruppe bestehend aus Aldimin-, Ketimin-, Oxazolan-, Hexahydropyrimidin- und Tetrahydroimidazolgruppen, wobei die betreffenden Verbindungen gleichzeitig auch mehrere dieser Gruppen enthalten können.

Die blockierten Polyamine der Komponente B) weisen ein als Gewichtsmittel bestimmtes Molekulargewicht von 86 bis 10,000, bevorzugt von 250 bis 4,000, auf und enthalten im statistischen Mittel 1 bis 50, bevorzugt 2 bis 10, und insbesondere 2 bis 4, Struktureinheiten der allgemeinen Formeln

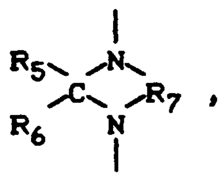 ,

IV

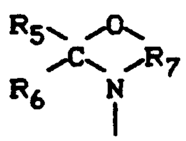 und/oder

V

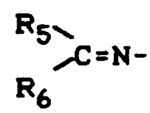

VI

wobei

$R_5$ und $R_6$ für gleiche oder verschiedene Reste stehen und Wasserstoff, aliphatische Kohlenwasserstoffreste mit 1 bis 18 Kohlenstoffatomen, cycloaliphatische Kohlenwasserstoffreste mit 5 bis 10 Kohlenstoffatomen, araliphatische Kohlenwasserstoffreste mit 7 bis 18 Kohlenstoffatomen oder Phenylreste bedeuten, wobei die beiden Reste $R_5$ und $R_6$ zusammen mit dem benachbarten Kohlenstoffatom auch einen 5- oder 6-gliedrigen cycloaliphatischen Ring bilden können, und wobei vorzugsweise höchstens einer der Reste für Wasserstoff steht, und

$R_7$ für einen zweiwertigen aliphatischen Kohlenwasserstoffrest mit 2 bis 6 Kohlenstoffatomen steht, mit der Maßgabe, daß zwischen den beiden Stickstoffatomen 2 oder 3 Kohlenstoffe angeordnet sind.

Bevorzugt eingesetzte Komponenten B sind z.B. solche, die Hexahydropyrimidin- bzw. Tetrahydroimidazolstrukturen der allgemeinen Formel IV enthalten, für welche $R_5$ und $R_6$ für gleiche oder verschiedene aliphatische Kohlenwasserstoffreste mit 2 bis 10 Kohlenstoffatomen stehen, wobei einer der Reste auch für Wasserstoff stehen kann und $R_7$ für einen Ethylen- oder Trimethylenrest steht.

Die Herstellung von blockierten Polyaminen der genannten Art gelingt in an sich bekannter Weise durch Umsetzung von entsprechenden Aldehyden bzw. Ketonen mit den entsprechenden Polyaminen.

Zur Herstellung der Hexahydropyrimidin- bzw. Tetrahydroimidazolgruppen aufweisenden Verbindungen B) geeignete Aldehyde bzw. Ketone sind beispielsweise solche der allgemeinen Formel

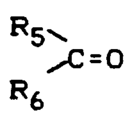 ,

die vorzugsweise ein Molekulargewicht von 72 bis 200 (Ketone) bzw. von 58 bis 250 (Aldehyde) aufweisen.

Beispiele hierfür sind Aceton, Methylethylketon, Methylpropylketon, Methylisopropylketon, Methyl-n-butylketon, Methylisobutylketon, Methyl-n-amylketon, Methylisoamylketon, Methylheptylketon, Diethylketon, Ethylbutylketon, Ethylamylketon, Diisopropylketon, Diisobutylketon, Cyclohexanon, Isophoron, Methyl-tert.-butylketon, 5-Methyl-3-heptanon, 4-Heptylketon, 1-Phenyl-2-propanon, Acetophenon, Methylnonylketon, 3,3,5-Trimethylcyclohexanon, Formaldehyd, Acetaldehyd, Propionaldehyd, Butyraldehyd, Isobutyraldehyd, Trimethylacetaldehyd, 2,2-Dimethylpropanal, 2-Ethylhexanal, 3-Cyclohexen-1-carboxaldehyd, Hexanal, Heptanal, Octanal, Valeraldehyd, Benzaldehyd, Tetrahydrobenzaldehyd, Hexahydrobenzaldehyd, Acrolein, Crotonaldehyd, Propargylaldehyd, p-Toluylaldehyd, 2-Methylpentanal, 3-Methylpentanal, Phenylethanal, 4-Methylpentanal.

Zur Herstellung der hexahydropyrimidin- bzw. Tetrahydroimidazolgruppen aufweisenden Verbindungen bevorzugte Aldehyde und Ketone sind Butyraldehyd, Isobutyraldehyd, Trimethylacetaldehyd, 2,2-Dimethylpropanal, 2-Ethylhexanal, Hexanal, 3-Cyclohexan-1-carboxaldehyd, Heptanal, Octanal, Hexahydrobenzaldehyd, 2-Methylpentanal, Cyclohexanon, Cyclopentanon, Methylisopropylketon, Aceton, 3,3,5-Trimethylcyclohexanon und Methylcyclohexanon.

Es können selbstverständlich auch Mischungen verschiedener Ketone bzw. Aldehyde und auch Mischungen von Ketonen mit Aldehyden eingesetzt werden, um spezielle Eigenschaften zu erzielen.

Bei den zur Herstellung der hexahydropyrimidin- bzw. Tetrahydroimidazolgruppen aufweisenden Verbindungen zum Einsatz gelangenden Polyaminen handelt es sich insbesondere um organische Verbindungen, die mindestens zwei primäre und/oder sekundäre Aminogruppen aufweisen.

Geeignete Polyamine sind beispielsweise solche der allgemeinen Formel

$R_8$ - NH - $R_7$ - NH - $R_9$,

in welcher

| | |
|---|---|
| $R_7$ | die obengenannte Bedeutung hat und |
| $R_8$ und $R_9$ | für gleiche oder verschiedene Reste stehen und Wasserstoff, aliphatische Kohlenwasserstoffreste mit 1 bis 10, bevorzugt 1 bis 4 Kohlenstoffatomen, cycloaliphatische Kohlenwasserstoffreste mit 5 bis 10, vorzugsweise 6 Kohlenstoffatomen oder aromatische Kohlenwasserstoffreste mit 7 bis 15, vorzugsweise 7 Kohlenwasserstoffatomen, stehen, wobei die genannten Kohlenwasserstoffreste, insbesondere die genannten aliphatischen Kohlenwasserstoffreste, gegebenenfalls Heteroatome wie Sauerstoff, Stickstoff oder Schwefel in Form von Ether-, Ester-, Amid-, Urethan-, Oxiran-, Keton- Lactam-, Harnstoff-, Thioether-, Thioester- oder Lactongruppen aufweisen können, oder wobei die Reste auch reaktionsfähige Hydroxyl- oder Aminogruppen aufweisen können. |

Besonders bevorzugte Polyamine sind solche, bei denen $R_8$ und $R_9$ für gleiche oder verschiedene einfache Alkylreste wie Methyl-, Ethyl-, n-Propyl-, iso-Propyl-, n-Butyl-, iso-Butyl-, tert.-Butyl-, n-Pentyl- oder n-Hexylreste stehen, oder wobei zumindest einer der Reste $R_8$ bzw. $R_9$ für einen Rest steht, wie er durch Anlagerung eines Aminwasserstoffatoms an eine olefinisch ungesättigte Verbindung erhalten wird. Zur Herstellung derartiger, modifizierter Polyamine geeignete, olefinisch ungesättigte Verbindungen sind beispielsweise Derivate der (Methyl)acrylsäure wie Ester, Amide, Nitrile oder z.B. Vinylaromaten wie Styrol, $\alpha$-Methylstyrol, Vinyltoluol oder z.B. Vinylester wie Vinylacetat, Vinylpropionat, Vinylbutyrat oder z.B. Vinylether wie Ethylvinylether, Propylvinylether, Butylvinylether oder Mono- und Diester der Fumarsäure, Maleinsäure oder Tetrahydrophthalsäure.

$R_8$ und/oder $R_9$ können auch für einen Aminoalkyl- oder Hydroxyalkylrest mit beispielsweise 2 bis 4 Kohlenstoffatomen stehen.

Ganz besonders bevorzugte Polyamine sind Ethylendiamin, 1,2-Propylendiamin, 1,3-Propylendiamin, 1,2- und 1,3-Butylendiamin, Diethylentriamin sowie Derivate dieser Polyamine.

Als Komponente B) geeignete, Oxazolangruppen der allgemeinen Formel V aufweisende Verbindungen sind vorzugsweise solche, für welche $R_5$ und $R_6$ für gleiche oder verschiedene Reste stehen und Wasserstoff oder aliphatische Kohlenwasserstoffreste mit 1 bis 18 und insbesondere 1 bis 8 Kohlenstoffatomen stehen, oder wobei die Reste $R_5$ und $R_6$ zusammen mit dem Kohlenstoffatom des heterocyclischen Rings einen cycloaliphatischen Ring mit insgesamt 4 bis 9 Kohlenstoffatomen, insbesondere einen Cyclohexanring bilden, mit den Maßgabe, daß höchstens einer der Rest $R_5$ oder $R_6$ für Wasserstoff steht, und wobei $R_7$ für einen Alkylenrest mit 2 bis 4, vorzugsweise 2 bis 3 Kohlenstoffatomen steht, mit der Maßgabe, daß zwischen dem Sauerstoff- und dem Stickstoffatom mindestens 2 Kohlenstoffatome angeordnet sind.

Die Herstellung der oxazolanhaltigen Komponente B) gelingt in an ich bekannter Weise durch Umsetzung von entsprechenden Aldehyden bzw. Ketonen der Formel

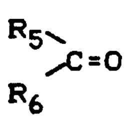

mit geeigneten Hydroxyaminen der nachstehend näher genannten Art.

Als Aldehyde bzw. Ketone kommen grundsätzlich solche der oben bereits beispielhaft genannten Art in Betracht. Bevorzugte Aldehyde bzw. Ketone sind hier Butyraldehyd, Isobutyraldehyd, Trimethylacetaldehyd, 2,2-Dimethylpropanal, 2-Ethylhexanal, 3-Cyclohexen-1-carboxaldehyd, Hexahydrobenzaldehyd, Cyclopentanon, Cyclohexanon, Methylcyclopentanon, Methylcyclohexanon, 3,3,5-Trimethylcyclohexanon, Cyclobutanon, Methylcyclobutanon, Aceton, Methylethylketon und Methylisobutylketon.

Es können selbstverständlich auch Mischungen verschiedener Ketone bzw. Aldehyde und auch Mischungen von Ketonen mit Aldehyden eingesetzt werden, um spezielle Eigenschaften zu erzielen.

Bei Hydroxyaminen handelt es sich insbesondere um organische Verbindungen, die mindestens eine aliphatische Aminogruppe und mindestens eine aliphatisch gebundene Hydroxylgruppe aufweisen. Die Verwendung von solchen Hydroxyaminen, die aromatisch oder cycloaliphatisch gebundene Amino- oder Hydroxylgruppen aufweisen, ist zwar ebenfalls möglich, jedoch weniger bevorzugt. Die Hydroxyamine weisen im allgemeinen ein zwischen 61 und 500, vorzugsweis zwischen 61 und 300 liegendes Molekulargewicht auf.

Geeignete Hydroxyamine können z.B. sein: Bis-(2-hydroxyethyl)-amin, Bis-(2-hydroxypropyl)-amin, Bis-(2-hydroxybutyl)-amin, Bis-(3-hydroxypropyl)-amin, Bis-(3-hydroxyhexyl)-amin, N-(2-hydroxypropyl)-N-(2-hydroxyethyl)-amin, 2-(Methylamino)-ethanol, 2-(Ethylamino)-ethanol, 2-(Propylamino)-ethanol, 2-(Butylamino)-ethanol, 2-(Hexylamino)-ethanol, 2-(Cyclohexylamino)-ethanol, 2-Amino-2-methyl-1-propanol, 2-Amino-2-ethyl-1-propanol, 2-Amino-2-propyl-1-propanol, 2-Amino-2-methyl-1,3-propandiol, 2-Amino-3-methyl-3-hydroxybutan, Propanolamin, Ethanolamin.

Ganz besonders bevorzugt sind: Bis-(2-hydroxyethyl)-amin, Bis-(2-hydroxypropyl)-amin, Bis-(2-hydroxybutyl)-amin, Bis-(3-hydroxyhexyl)-amin, 2-(Methylamino)-ethanol, 2-(Ethylamino)-ethanol, 2-Amino-2-methyl-1-propanol, 2-Amino-2-ethyl-1-propanol, Propanolamin und Ethanolamin.

Zu den bevorzugten Aldimin- bzw. Ketimingruppen aufweisenden Verbindungen gehören solche, die Sturktureinheiten der allgemeinen Formel VI

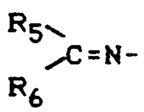

enthalten, wobei

$R_5$ und $R_6$ für gleiche oder verschiedene Reste stehen und Wasserstoff oder aliphatische Kohlenwasserstoffreste mit 1 bis 8 Kohlenstoffatomen stehen, die auch zusammen mit dem Kohlenstoffatom zu einem cycloaliphatischen Ring, insbesondere einem Cyclohexanring verknüpft sein können.

Zur Herstellung dieser Verbindungen sind im Prinzip die bereits oben beispielhaft genannten Aldehyde bzw. Ketone geeignet. Bevorzugte Aldehyde bzw. Ketone sind hier Butyraldehyd, Isobutyraldehyd, Trimethylacetaldehyd, 2,2-Dimethylpropanal, 2-Ethylhexanal, 3-Cyclohexen-1-carboxaldehyd, Hexahydrobenzaldehyd und insbesondere solche Ketone, die einen Siedepunkt von unter 170° C aufweisen und bei Raumtemperatur eine gute Flüchtigkeit zeigen, wie. z.B. Methylisobutylketon, Methylisopropylketon, Diethylketon, Diisobutylketon, Methyl-tert.-butylketon.

Es können selbstverständlich auch Mischungen verschiedener Ketone bzw. Aldehyde und auch Mischungen von Ketonen mit Aldehyden eingesetzt werden, um spezielle Eigenschaften zu erzielen.

Bei den zur Herstellung der Ketimin- bzw. Aldimingruppen enthaltenden Komponente B) zum Einsatz gelangenden Polyaminen handelt es sich insbesondere um organische Verbindungen, die mindestens zwei aliphatisch und/oder cycloaliphatisch gebundene primäre Aminogruppen aufweisen. Die Verwendung von solchen Polyaminen, die aromatisch gebundene Aminogruppen aufweisen, ist zwar ebenfalls möglich, jedoch weniger bevorzugt. Die Polyamine weisen im allgemeinen ein von 60 bis 500, vorzugsweise von 88 bis 400 liegendes Molekulargewicht auf, jedoch können auch höhermolekulare, endständige Aminogruppen aufweisende Prepolymere als Polyaminkomponente bei der Herstellung der Komponente B) eingesetzt werden.

Besonders bevorzugte Polyamine sind diprimäre aliphatische bzw. cycloaliphatische Diamine wie beispielsweise Tetramethylendiamin, Hexamethylendiamin, Isophorondiamin, Bis-(4-aminocyclohexyl)-methan, Bis-aminomethylhexahydro-4,7-methanoindan, 1,4-Cyclohexandiamin, 1,3-Cyclohexandiamin, 2-Methylcyclohexandiamin, 4-Methylcyclohexandiamin, 2,2,5-Trimethylhexandiamin, 2,2,4-Trimethylhexandiamin, 1,4-Butandiol-bis-(3-aminopropyl)-ether, 2,5-Diamino-2,5-dimethylhexan, Bis-aminomethylcyclohexan, Bis-(4-amino-3,5-dimethylcyclohexyl)-methan oder deren Gemische.

Ganz besonders bevorzugt sind Tretramethylendiamin, Hexamethylendiamin, Isophorondiamin, Bis-aminomethylcyclohexan, 1,4-Cyclohexandiamin, Bis-aminomethylhexahydro-4,7-methanoindan und Bis-(4-aminocyclohexyl)-methan.

Neben diesen bevorzugten Diaminen können zur Herstellung der Aldimine bzw. Ketimine auch endständige primäre Aminogruppen aufweisende Prepolymere eingesetzt werden, d.h. Verbindungen, die mindestens zwei endständige Aminogruppen und ein Molekulargewicht von 500 bis 5.000, vorzugsweise 500 bis 2.000, aufweisen. Zu diesen Verbindungen gehören beispielsweise die aus der Polyurethanchemie an sich bekannten Aminopolyether, wie sie beispielsweise in der EP-A-0 081 701 beschrieben werden, oder z.B. Amid-, Harnstoff-, Urethan- oder sekundäre Aminogruppen aufweisende Umsetzungsprodukte von mindestens difunktionellen Carbonsäuren, Isocyanaten oder Epoxiden mit Diaminen der oben beispielhaft genannten Art, wobei diese Umsetzungsprodukte noch mindestens zwei primäre Aminogruppen aufweisen. Auch Gemische von derartigen höhermolekularen Polyaminen mit den beispielhaft genannten niedermolekularen Polyaminen können zum Einsatz gelangen.

Zu den aromatischen Polyaminen, die im Prinzip auch zur Herstellung der Aldimine bzw. Ketimine geeignet, jedoch weniger bevorzugt sind, gehören beispielsweise 2,4- und 2,6-Diaminotoluol, 1,4-Diaminobenzol oder 4,4′-Diaminodiphenylmethan.

Die Herstellung der Komponente B), welche Aldimin-, Ketimin-, Oxazolan-, Hexahydropyrimidin- oder Tetrahydroimidazolgruppen enthalten kann, erfolgt durch Umsetzung der Ausgangskomponenten, wobei im allgemeinen die Mengenverhältnisse der Reaktionspartner so gewählt werden, daß die Aminoverbindungen, bezogen auf die jeweilig angestrebte Reaktion, in 1- bis 1,5-fachem molarem Überschuß, bezogen auf die Carbonylgruppen, vorliegen. Gegebenenfalls können zur Reaktionsbeschleunigung katalytische Mengen von sauren Substanzen wie z.B. p-Toluolsulfonsäure, Salzsäure, Schwefelsäure, Aluminium-III-chlorid, Zinnverbindungen eingesetzt werden.

Die Umsetzung erfolgt im allgemeinen innerhalb des Temperaturbereichs von 60 bis 180° C, wobei die Reaktion in Gegenwart eines Schleppmittels zur Entfernung des Reaktionswassers so lange durchgeführt wird, bis die berechnete Menge an Wasser abgespalten ist bzw. bis kein Wasser mehr abgespalten wird. Anschließend werden Schleppmittel und gegebenenfalls vorliegende, nicht umgesetzte Ausgangsmaterialien destillativ abgetrennt. Geeignete Schleppmittel sind z.B. Toluol, Xylol, Cyclohexan, Octan. Die so erhaltenen Rohprodukt können ohne weitere Reinigungsschritte als Komponente B) zur Herstellung der Bindemittelkombination verwendet werden. Werden besonders hohe Anforderungen an die Reinheit der Komponente B) gestellt, so ist es auch möglich, z.B. durch eine Destillation, die Komponenten B) in reiner Form zu erhalten.

Zu den bevorzugten, blockierten Polyaminen der Komponente B) gehören auch solche, in denen 2 bis 10 Struktureinheiten der allgemeinen Formel IV, V, VI enthalten sind, und die durch Verknüpfung dieser Strukturelemente unter Ausbildung von z.B. Ester-, Ether-, Amid-, Harnstoff- und/oder Urethanbindungen erhalten werden.

Zur Verknüpfung untereinander geeignete Struktureinheiten der Formeln IV, V, VI müssen mindestens eine primäre bzw. sekundäre Aminogruppe oder eine Hydroxylgruppe in nicht blockierter Form enthalten.

Geeignete Verknüpfungsreagenzien zur Herstellung höhermolekularer Komponenten B) sind z.B. Polyisocyanate, Polyepoxide, Polycarbonsäuren und Polyacryloylverbindungen.

Für diese Modifizierungsreaktion geeignete Polyisocyanate sind beispielsweise aliphatische, cycloaliphatische, araliphatische, aromatische und heterocyclische Polyisocyanate, wie sie z.B. von W. Siefken in Justus Liebigs Annalen der Chemie, 562, S. 75-136, beschrieben werden, beispielsweise 1,4-Tetramethylendiisocyanat, 1,6-Hexamethylendiisocyanat, 1,12-Dodecandiisocyanat, Cyclobutan-1,3-diisocyanat, Cyclohexan-1,3-diisocyanat, Cyclohexan-1,4-diisocyanat, 1-Isocyanato-3,3,5-trimethyl-5-isocyanatomethylcyclohexan, 2,4- und 2,6-Hexahydrotoluylendiisocyanat, Hexahydro-1,3- und -1,4-phenylen-diisocyanat, Perhydro-2,4′- und/oder -4,4′-diphenylmethandiisocyanat, 1,3-Phenylendiisocyanat, 1,4-Phenylendiisocyanat, 2,4-Toluylendiisocyanat, 2,6-Toluylendiisocyanat, Diphenylmethan-2,4′- und/oder -4,4′-diisocyanat, Naphthylen-1,5-diisocyanat, Gemische dieser und anderer Polyisocyanate, Polyisocyanate mit Carbodiimidgruppen (z.B. DE-OS 10 92 007), Polyisocyanate mit Allophanatgruppen (z.B. GB-PS 944 890), Isocyanuratgruppen aufweisende Polyisocyanate (z.B. DE-PS 10 22 789, DE-PS 12 22 067), Urethangruppen aufweisende Polyisocyanate (z.B. US-PS 33 94 164) oder durch Umsetzung von mindestens difunktionellen Hydroxyverbindungen mit überschüssigen, mindestens difunktionellen Isocyanaten hergestellte Polyisocyanate, Biuretgruppen aufweisende Polyisocyanate (z.B. DE-PS 11 01 394) und präpolymere bzw. polymere Substanzen mit mindestens zwei Isocyanatgruppen.

Vertreter dieser erfindungsgemäßen zu verwendenden Verbindungen sind z.B. in High Polymers, Vol. XVI, "Polyurethans, Chemistry and Technology" Interscience Publishers, New York, London, Band I, 1962, S. 32-42 bzw. 45-54 und Band II, 1964, S. 5-6 und 198-199, sowie im Kunststoffhandbuch, Band VII, Vieweg-Höchtlen, Carl-Hanser-Verlag, München, 1966, S. 45-72, beschrieben.

Für die genannte Modifizierungsreaktion genannte Polyepoxide sind beispielsweise aliphatische, cycloaliphatische, araliphatische, aromatische und heterocyclische, mindestens zwei Epoxidgruppen enthaltende Substanzen, wie z.B. epoxidierte Ester aliphatischer polybasischer Säuren mit ungesättigten einwertigen Alkoholen, Glycidylether von Polyhydroxyverbindungen, Glycidylester von Polycarbonsäuren, epoxidgruppenhaltige Copolymerisate.

Für die Modifizierungsreaktion geeignete Polycarbonsäuren sind beispielsweise aliphatische, cycloaliphatische, araliphatische, aromatische und heterocyclische, mindestens zwei Carboxylgruppen enthaltende Substanzen, wie z.B. Adipinsäure, Dimerfettsäure, Phthalsäure, Terephthalsäure, Isophthalsäure, Fumarsäure, Maleinsäure, Bernsteinsäure, Trimellithsäure, Pyromellithsäure, (Meth)acrylsäure-haltige Copolymerisate, saure Polyester oder saure Polyamide.

Anstelle der beispielhaft genannten Säuren können auch die entsprechenden Säureanhydride (sofern es sich um intramolekulare Anhydride bildende Säuren handelt) oder die entsprechenden einfachen Alkylester, insbesondere Methylester für die Modifizierungsreaktion eingesetzt werden.

Für die Modifizierungsreaktion geeignete Verbindungen mit mindestens zwei olefinischen Doppelbindungen der genannten Art sind insbesondere Derivate der Acrylsäure bzw. Methacrylsäure wie beispielsweise Hexandiol-bis-(meth)acrylsäureester, Trimethylolpropan-tris-(meth)acrylsäureester, Pentaerythrittetra-(meth)acrylsäureester, OH-funktionelle Polyester bzw. Polyacrylate, die mit Acrylsäure verestert sind, Diethylenglykoldimethacrylsäureester, Umsetzungsprodukte von Polyisocyanaten mit Hydroxyalkyl(meth)-acrylat.

Bei der Modifizierungsreaktion zur Herstellung von höherfunktionellen Komponenten B) ist es auch möglich, Gemische verschiedener blockierter Amine einzusetzen, die jeweils mindestens eine freie, mit dem Modifizierungsmittel reaktionsfähige Hydroxyl- oder Aminogruppe aufweisen.

Ketimin- bzw. Aldimingruppen-haltige Polyamine, die noch mindestens eine freie primäre bzw. sekundäre Aminogruppe oder eine freie Hydroxylgruppe enthalten, erhält man z.B. durch Umsetzung von mindestens difunktionellen Aminen mit Ketonen und/oder Aldehyden in solchen Äquivalentverhältnissen, daß mindestens eine Aminogruppe frei bleibt.

Auch bei der Verwendung von beispielsweise solchen Polyaminen, die neben primären Aminogruppen mindestens eine sekundäre Aminogruppe aufweisen, entstehen bei der Umsetzung mit Aldehyden oder Ketonen Aldimine bzw. Ketimine, die mindestens eine freie sekundäre Aminogruppe aufweisen (falls unter Einhaltung eines Äquivalentverhältnisses von primären Aminogruppen zu Carbonylgruppen von 1:1 gearbeitet worden ist), bzw. die neben mindestens einer sekundären Aminogruppe noch freie primäre Aminogruppen enthalten (falls die Carbonylverbindungen, bezogen auf die primären Aminogruppen, im Unterschuß verwendet worden sind). Derartige primär-sekundäre Polyamine sind beispielsweise Diethylentriamin, Triethylentetramin, Tetraethylenpentamin, Dipropylentriamin, Tripropylentetramin.

Oxazolangruppen enthaltende Verbindungen, die noch mindestens eine reaktive primäre bzw. sekundäre Aminogruppe oder eine Hydroxygruppe aufweisen, erhält man z.B. durch Umsetzung von Hydroxyaminen, die neben einer Hydroxygruppe und einer sekundären Aminogruppe noch mindestens eine weitere Hydroxygruppe und/oder primäre bzw. sekundäre Aminogruppe aufweisen, oder durch Umsetzung von geeigneten Hydroxyaminen mit einer Hydroxygruppe und einer primären Aminogruppe in geeigneten Äquivalentverhältnissen mit Ketonen und/oder Aldehyden, wie sie z.B. weiter oben beschrieben worden sind. Geeignete Hydroxyamine können z.B. sein: Bis-(2-hydroxyethyl)-amin, Bis-(2-hydroxypropyl)-amin, Bis-(2-hydroxybutyl)-amin, Bis-(3-hydroxypropyl)-amin, Bis-(3-hydroxyhexyl)-amin, N-(2-hydroxypropyl)-N-(6-hydroxyhexyl)-amin, 2-Amino-2-methyl-1-propanol, 2-Amino-2-methyl-1,3-propandiol, 2-Amino-3-methyl-3-hydroxybutan, Aminoethanol.

Die Herstellung der Oxazolangruppen enthaltenden Hydroxyamine, die noch mindestens eine freie primäre bzw. sekundäre Aminogruppe bzw. eine Hydroxygruppe aufweisen, erfolgt durch Umsetzung der genannten Ausgangskomponenten unter Einhaltung eines solchen Äquivalentverhältnisses von Amino- bzw. Hydroxygruppen zu Aldehyd- bzw. Ketongruppen, daß mindestens eine primäre bzw. sekundäre Aminogruppe bzw. eine Hydroxygruppe nicht blockiert wird und für die anschließende Umsetzung mit dem als Modifizierungsmittel verwendeten Reaktionspartner zur Verfügung steht.

Hexahydropyrimidin- bzw. Tetrahydroimidazolgruppen enthaltende Verbindungen, die noch mindestens eine reaktive primäre bzw. sekundäre Aminogruppe oder eine Hydroxygruppe aufweisen, erhält man z.B. durch Umsetzung von Hydroxyaminen, die neben mindestens einer Hydroxygruppe noch zwei sekundäre Aminogruppen enthalten, wie z.B. N-Methyl-N′-4-hydroxytetramethylendiamin, oder durch Umsetzung von Polyaminen, die neben mindestens einer sekundären Aminogruppe mindestens eine primäre Aminogruppe oder mindestens zwei weitere sekundäre Aminogruppen enthalten, wie z.B. N-Methyl-1,3-diaminoethan, N-Methyl-1,3-diaminopropan, N-Methyl-1,3-diaminobutan, Diethylentriamin, N-Methyldiethylentriamin, 3,3′-Diaminodipropylamin, N,N′-Dimethylethylentriamin.

Die Herstellung der Hexahydropyrimidin- bzw. Tetrahydroimidazolgruppen enthaltenden Verbindungen, welche noch mindestens eine frei primäre bzw. sekundäre Aminogruppe bzw. eine Hydroxylgruppe aufweisen, erfolgt durch Umsetzung der genannten Ausgangsverbindungen unter Einhaltung eines solchen Äquivalentverhältnisses von Amino- bzw. Hydroxygruppen zu Aldehyd- bzw. Ketogruppen, daß mindestens eine primäre bzw. sekundäre Aminogruppe bzw. eine Hydroxylgruppe nicht blockiert wird und für die anschließende Umsetzung mit dem als Modifizierungsmittel verwendeten Reaktionspartner zur Verfügung steht.

Zur näheren Erläuterung seien folgende Struktureinheiten, welche zum Aufbau solcher höhermolekularer, Ester-, Ether-, Amid-, Harnstoff-, Urethanbindungen enthaltender Komponenten B) geeignet sind, beispielhaft genannt:

- Bisketimin aus Diethylentriamin und Aceton

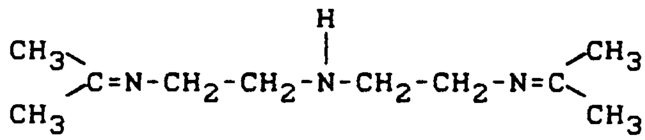

- Aldimin aus Isophorondiamin und Isobutyraldehyd

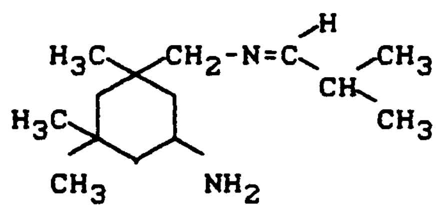

- Oxazolan aus Diethanolamin und Isobutyraldehyd

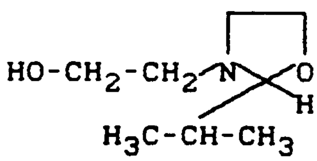

- Hexahydropyrimidin aus N-Methyl-1,3-diaminopropan und Cyclohexanon

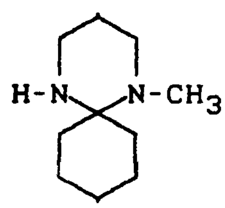

Falls die oben beispielhaft genannten Modifizierungsmittel mit freien primären bzw. sekundären Amino- bzw. Hydroxylgruppen aufweisenden Hexahydropyrimidinen bzw. Tetrahydroimidazolen umgesetzt werden, entstehen höherfunktionelle Hexahydropyrimidine bzw. Tetrahydroimidazole. Entsprechendes gilt für die Modifizierung von Aldiminen bzw. Ketiminen und für die Modifizierung von Oxazolanen.

Falls die Modifizierungsmittel jedoch mit Gemischen aus Hexahydropyrimidinen, Tetrahydroimidazolen, Aldiminen, Ketiminen und/oder Oxazolanen, welche freie primäre bzw. sekundäre Amino- bzw. Hydroxylgruppen aufweisen, umgesetzt werden, entstehen Vernetzungskomponenten B), in denen Hexahydropyrimidine, Tetrahydroimidazole, Ketimine, Aldimine und/oder Oxazolane chemisch miteinander verknüpft sind.

Durch diese Modifizierungs- bzw. Verknüpfungsreaktionen sind somit die unterschiedlichsten, als Komponente B) geeigneten Verbindungen zugänglich.

Die Modifizierungsreaktion wird üblicherweise in einem Lösungsmittel der oben beispielhaft genannten Art bei Reaktionstemperaturen von 30 bis 180 ° C, gegebenenfalls am Wasserabscheider, durchgeführt.

Dabei wird in der Regel ein äquivalentes Verhältnis von reaktionsfähigen Gruppen der blockierten Polyamine zu den reaktionsfähigen Gruppen des "Modifizierungsmittels" gewählt. Es ist jedoch auch möglich, die "Modifizierungsmittel" im Unterschuß, etwa unter Verwendung von 0,75 bis 0,99-fach äquivalenten Mengen, einzusetzen.

Durch die genannten Modifzierungsreaktionen zugängliche, als Komponente B) geeignete Polyamine sind beispielsweise Verbindungen der Formeln:

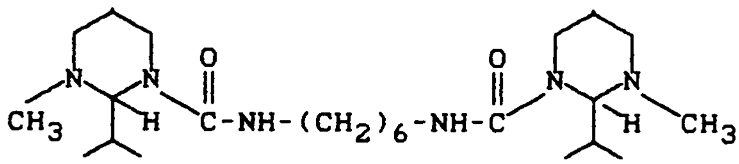

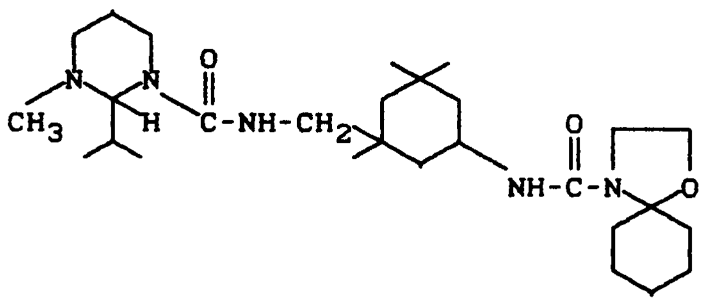

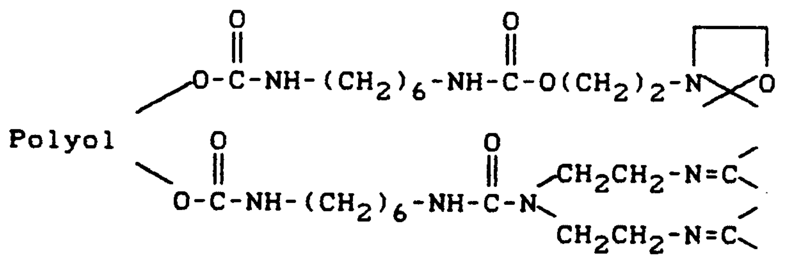

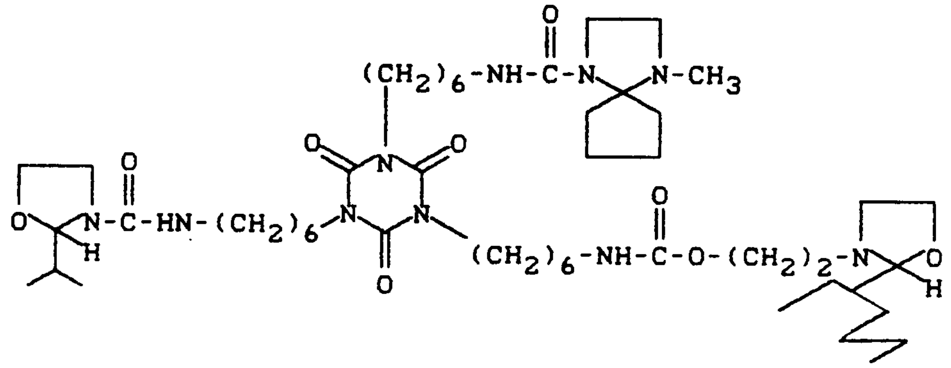

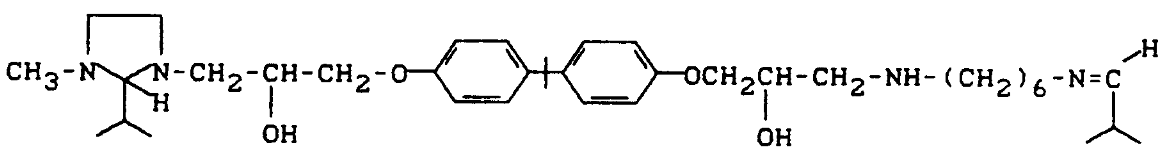

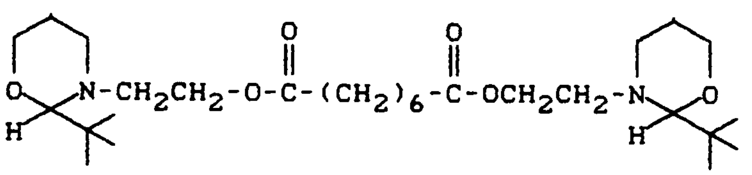

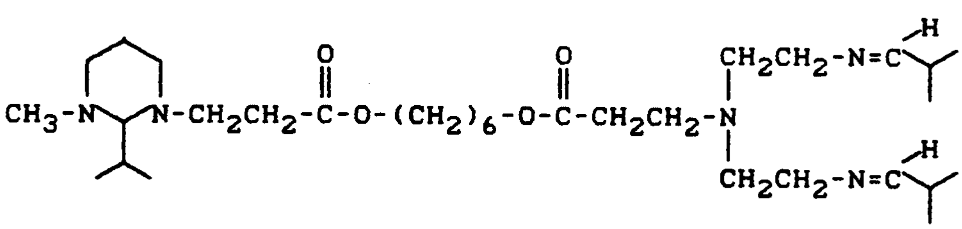

In einer speziellen Ausführungsform enthalten die Bindemittelkomnbinationen neben den Komponenten A) und B) als weitere Komponente C) ein- und/oder mehrwertige Alkohole in Mengen von jeweils 0,1 bis 20 Gew.-Teilen.

Geeignete einwertige Alkohole sind beispielsweise Ethanol, n-Propanol, iso-Propanol, n-Butanol, sek.-Butanol, tert.-Butanol, n-Pentanol, iso-Pentanol, n-Hexanol, iso-Hexanol, Cyclopentanol, Cyclohexanol, Heptanol, Octanol, Methylglykol, Ethylglykol, Propylglykol, Isopropylglykol, Butylglykol, Methyldiglykol, Ethyldiglykol, Propyldiglykol, Butyldiglykol, Methyltriglykol, Hexylglykol, Propylenglykolmonomethylether, Tripropylenglykolmonomethylether, Dipropylenglykolmonomethylether, Glykolsäurealkylester, Milchsäurealkylester, 2-Ethylbutanol, 2-Ethylhexanol, 3-Methoxybutanol, Diacetonalkohol, Furfurylalkohol, Tetrahydrofurfurylalkohol, Caprylalkohol, Caprinalalkohol, Laurinalkohol, Myristinalkohol, Palmitinalkohol, Stearinalkohol, Archinalkohol, Behenalkohol, Lignocerinalkohol, Lauroleinalkohol, Myristoleinalkohol, Palimitoleinalkohol, Ölalkohol, Gadoleinalkohol, Erucaalkohol, Linolalkohol, Linolenalkohol, Licanalkohol, Arachidonalkohol, synthetische

Fettalkohole und Gemische dieser und/oder anderer Monoalkohole.

Geeignete mehrwertige Alkohole sind beispielsweise an sich bekannte Copolymerisate von Acrylsäurederivaten, Methacrylsäurederivaten, Vinylaromaten, Vinylether und Vinylester, welche hydroxylfunktionelle Monomere wie z.B. Hydroxyalkyl(meth)acrylate einpolymerisiert enthalten. Solche Copolymerisate werden z.B. beschrieben in EP-A-64 338, EP-A-134 691, EP-A-103 199, EP-A-48 128.

Weitere mehrwertige Alkohole sind an sich bekannte hydroxylfunktionelle Polyesterharze, wie sie z.B. in H. Wagner/H.F. Sarx, Lackkunstharze, Carl-Hanser-Verlag München 1971, S. 86 ff. beschrieben werden.

Weitere mehrwertige Alkohole sind beispielsweise hydroxylfunktionelle Polyetherverbindungen wie z.B. die Alkoxylierungsprodukte von niedermolekularen, mehrwertigen Alkoholen der nachstehend beispielhaft genannten Art.

Weitere geeignete mehrwertige Alkohole sind beispielsweise einfache, mehrwertige Alkohole wie Neopentylglykol, Hexandiol, Butandiol, 1,4-Cyclohexandiol, 1,4-Cyclohexandimethanol, Ethylenglykol, Glycerin, Trimethylolpropan, 1,2-Propandiol, 1,3-Propantriol, 1,5-Pentandiol, 1,12-Octadecandiol, 2-Buten-1,4-diol, 2-Butin-1,4-diol, Pentaerythrit, 4,4-(1-Methylethyliden)-biscyclohexanol, Bis-hydroxymethyl-hexahydro-4,7-methanol-indan, 2,2-Bis-[n-(2-hydroxyethoxy)-phenyl]-propan.

Weitere geeignete mehrwertige Alkohole sind beispielsweise Umsetzungsprodukte von Caprolacton mit den genannten Alkohole.

Weitere geeignete mehrwertige Alkohole sind schließlich auch hydroxylfunktionelle Polyadditionsverbindungen, wie sie aus überschüssigen Mengen an Polyhydroxylverbindungen der beispielhaft genannten Art mit organischen Polyisocyanaten der oben beispielhaft genannten Art erhältlich sind.

Die erfindungsgemäßen Bindemittelkombinationen können als weiteren Bestandteil auch D) Katalysatoren enthalten. Geeignete Katalysatoren sind insbesondere tert.-Amine des Molekulargewichtsbereichs 89 bis 1.000 wie z.B. 1,4-Diazabicyclo-[2.2.2]-octan, Triethylendiamin, Triethylamin, Triethanolamin, Dimethylethanolamin, Methyldiethanolamin, Diethanolamin, Diethylethanolamin, Dibutylethanolamin, Diethylhexanolamin, N,N,N′,N′-Tetramethylethylendiamin, N,N-Dimethyl-1,3-propandiamin, 1,8-Diazabicyclo-(5,4,0)-undec-7-en.

Schließend können die erfindungsgemäßen Bindemittelkombinationen auch noch weitere Hilfs- und Zusatzmittel E) wie beispielsweise Lösungs- bzw. Verdünnungsmittel, Verlaufshilfsmittel, Antioxidantien oder UV-Absorber enthalten.

Die Durchführung des erfindungsgemäßen Verfahrens erfolgt dergestalt, daß man die Ausgangskomponenten A) und B), sowie gegebenenfalls die Komponenten C), D) und E) miteinander vermischt. Im Falle der Mitverwendung von Lösungs- bzw. Verdünnungsmitteln als Komponente E) können diese bereits einer oder mehrerer der Einzelkomponenten oder aber erst dem Gemisch aus den Komponenten A) bis D) zugemischt werden. Insbesondere ist eine Ausführungsform denkbar, derzufolge die Lösungs- bzw. Verdünnungsmittel auch schon während der Herstellung einer oder mehrerer Ausgangskomponenten zugegen sind, wie dies z.B. vorstehend bei der Herstellung der Copolymerisate beschrieben worden ist. Die Lösungs- bzw. Verdünnungsmittel sollten weitgehend wasserfrei sein, um eine ausreichende Verarbeitungszeit der Gemische sicherzustellen. Lösungs- bzw, Verdünnungsmittel werden im allgemeinen in solchen Mengen mitverwendet, die zur Einstellung von geeigneten Verarbeitungsviskositäten der erfindungsgemäßen Kombinationen erforderlich sind. Der Festgehalt der der erfindungsgemäßen Verwendung zuzuführenden erfindungsgemäßen Kompositionen liegt im allgemeinen zwischen 20 und 90 Gew.-%. Durch Verwendung geeigneter niedermolekularer Copolymerisate ist es jedoch auch prinzipiell möglich, den Lösungs- bzw. Verdünnungsmittelgehalt noch weiter zu reduzieren, bzw. auf die Mitverwendung dieser Hilfsmittel völlig zu verzichten.

Gemäß einer bevorzugten Ausführungsform des erfindungsgemäßen Verfahrens werden als alleinige blockierte Polyamine Verbindungen B) eingesetzt, die keine in Abwesenheit von Feuchtigkeit gegenüber Anhydridgruppen reaktionsfähige Gruppen aufweisen, und deren blockierte Aminogruppen ausschließlich aus Hexahydropyrimidin-, Tetrahydroimidazol-, Aldimin-, Ketimin- und/oder Oxazolangruppen der genannten Art bestehen. Die bevorzugten, so hergestellten erfindungsgemäßen Kombinationen enthalten 40 bis 90 Gew.-Teile an Copolymerisaten A) und 10 bis 60 Gew.-Teile Hexahydropyrimidin-, Tetrahydroimidazol-, Ketimin-, Aldimin- bzw. Oxazolangruppen aufweisende Verbindungen B).

Die Mengenverhältnisse der Einzelkomponenten A) und B) werden im allgemeinen so gewählt, daß auf jede blockierte Aminogruppe der Komponente B) insgesamt 0,2 bis 8, vorzugsweise 0,5 bis 4 Epoxid- und Anhydridgruppen der Komponente A) entfallen. Im allgemeinen wird man einen höheren Überschuß an den letztgenannten Gruppen innerhalb der genannten Bereiche dann wählen, wenn die übrigen Komponenten reaktive Gruppe aufweisen, die in Abwesenheit von Feuchtigkeit mit Epoxid- oder Säureanhydridgruppen reagieren. Hierzu gehören insbesondere primäre oder sekundäre Aminogruppen, die beispielsweise neben den blockierten Aminogruppen in der Komponente B) vorliegen können und auch alkoholische Hydroxylgruppen, die in der Komponente C) oder auch in der Komponente B) neben den blockierten Aminogruppen vorhanden sein können. Im allgemeinen sind jedoch alkoholische Hydroxylgruppen unter den Bedingungen

des erfindungsgemäßen Verfahrens (Raumtemperatur) gegenüber Epoxid- und Säureanhydridgruppen weitgehend inert, so daß die Hydroxylgruppen nur dann in Betracht gezogen werden müssen, wenn sie in Form von schwerflüchtigen Alkoholen zum Einsatz gelangen, die bei der Verwendung der erfindungsgemäßen Kombinationen nicht verdunsten und, beispielsweise bei höheren Temperaturen während des Aushärtens von Beschichtungen als Reaktionspartner für die Komponente A) in Betracht kommen.

Insbesondere, wenn als Komponente B) solche Verbindungen eingesetzt werden, die neben den blockierten Aminogruppen freie primäre oder sekundäre Aminogruppen aufweisen, entstehen bei der Durchführung des erfindungsgemäßen Verfahrens komplexe Gemische, in denen Amidgruppen (durch Reaktion der Säureanhydridgruppen mit Aminogruppen) oder Aminogruppen (durch Reaktion von Epoxidgruppen mit Aminogruppen) vorliegen. Der Begriff "Bindemittelkombination" umfaßt daher im Rahmen der Erfindung sowohl reine Gemische aus den Einzelkomponenten A) und B), sowie gegebenenfalls den übrigen Komponenten, in denen keine Umsetzungsprodukte der Einzelkomponenten vorliegen, als auch Systeme, in denen neben den Einzelkomponenten derartige Umsetzungsprodukte vorliegen, bzw., die im wesentlichen ausschließlich aus derartigen Umsetzungsprodukten bestehen. Bei allen Varianten des erfindungsgemäßen Verfahrens muß im übrigen darauf geachtet werden, daß das Molverhältnis von Säureanhydrid- und Epoxidgruppen zu blockierten Aminogruppen nach Beendigung der gegebenenfalls spontan ablaufenden Reaktion zwischen Säureanhydrid- bzw. Epoxidgruppen einerseits und primären bzw. sekundären Aminogruppen andererseits bei 0,5:1 bis 4:1 liegt, wobei auch hier ein Überschuß an Säureanhydrid- bzw. Epoxidgruppen in Betracht gezogen werden sollte, falls Einzelkomponenten mitverwendet werden, die alkoholische Hydroxylgruppen aufweisen, die zwar, wie gesagt, unter den Bedingungen des erfindungsgemäßen Verfahrens weitgehend inert sind, bei der erfindungsgemäßen Verwendung jedoch neben den blockierten Aminogruppen als Reaktionspartner für die Säureanhydrid- bzw. Epoxidgruppen in Betracht kommen.

Unter "gegenüber Säureanhydrid- bzw. Epoxidgruppen reaktionsfähige Wasserstoffatome aufweisenden, blockierten Polyaminen B)" sind im Rahmen der Erfindung im übrigen nicht nur solche blockierte Polyamine der genannten Art zu verstehen, die reaktionsfähige Wasserstoffatome in chemisch gebundener Form enthalten, sondern vielmehr auch solche, die im Gemisch mit überschüssigem, zu ihrer Herstellung eingesetztem Polyamin bzw. Hydroxylamin vorliegen.

Bezüglich der Verwendbarkeit der erfindungsgemäßen Bindemittelkombinationen ist es weitgehend ohne Bedeutung, ob die gegebenenfalls spontan ablaufende Reaktion zwischen den Copolymerisaten A) und den gegenüber Säureanhydrid- bzw. Epoxidgruppen reaktionsfähigen Gruppen bereits vollständig zum Abschluß gekommen ist. Gewünschtenfalls ist es jedoch möglich, diese Reaktion vor der erfindungsgemäßen Verwendung durch kurzzeitiges Erhitzen auf 40 bis 100 ° C zum Abschluß zu bringen. Im übrigen erfolgt die Durchführung des erfindungsgemäßen Verfahrens vorzugsweise bei Raumtemperatur.

Bei der Durchführung des erfindungsgemäßen Verfahrens können selbstverständlich jeweils beliebige Gemische unterschiedlicher Einzelkomponenten A) und B) und gegebenenfalls C), D), E) zur Anwendung gelangen.

Die erfindungsgemäßen Verfahrensprodukte sind im allgemeinen bei Raumtemperatur flüssig, sie sind in Abwesenheit von Wasser ausreichend lagerstabil und härten nach Applikation auf ein Substrat in Gegenwart von Luftfeuchtigkeit im allgemeinen rasch aus.

In der Regel werden bereits bei Raumtemperatur vernetzte Filme erhalten. Die an sich schon sehr rasche Aushärtung kann durch Trocknung bei höheren Temperaturen noch weiter beschleunigt werden. Dabei sind Temperaturen von 80 bis 130 ° C und Trockungszeiten von 10 bis 30 Minuten vorteilhaft.

Bei Verwendung von besonders hydrolysestabilen blockierten Aminogruppen bzw. bei Mitverwendung von nicht flüchtigen mehrwertigen Alkoholen C) kann diese forcierte Trocknung bei höheren Temperaturen erforderlich sein, um das optimale Eigenschaftsbild zu erhalten.

Die der erfindungsgemäßen Verwendung zuzuführenden, die erfindungsgemäßen Produkte als Bindemittels enthaltenden Lacke und Beschichtungsmassen können die in der Lacktechnologie üblichen Hilfs- und Zusatzstoffe, wie beispielsweise Pigmente, Füllstoffe, Verlaufshilfsmittel, Antioxidantien oder UV-Absorber enthalten.

Diese Hilfs- und Zusatzstoffe sollten möglichst wasserfrei sein und werden vorzugsweise bereits vor der Durchführung des erfindungsgemäßen Verfahrens den Ausgangskomponenten, im allgemeinen der Komponente A), einverleibt.

Die, die erfindungsgemäßen Produkte als Bindemittel enthaltenden Lacke und Beschichtungsmassen weisen in Abwesenheit von Feuchtigkeit im allgemeinen eine Topfzeit von 1 bis 24 Stunden auf. Durch Auswahl geeigneter Reaktionspartner kann die Topfzeit jedoch beliebig nach oben oder unten korrigiert werden. Die Lacke und Beschichtungsmassen können nach den üblichen Methoden, beispielsweise durch Spritzen, Streichen, Tauchen, Fluten, Gießen, Walzen auf beliebige, gegebenenfalls bereits vorbehandelte

Untergründe wie z.B. Metall, Holz, Glas, Keramik, Stein, Beton, Kunststoffe, Textilien, Leder, Pappe oder Papier aufgetragen werden.

In den nachfolgenden Beispielen beziehen sich alle Prozentzahlen und -teile, falls nicht anders vermerkt, auf das Gewicht.

## Beispiele

### I. Herstellung der Anhydrid- und Epoxidgruppen enthaltenden Copolymerisate A

Allgemeine Herstellvorschrift:

In einem 4- bzw. 6-l-Reaktionsgefäß mit Rühr-, Kühl- und Heizvorrichtung wird Teil I vorgelegt, auf Reaktionstemperatur aufgeheizt und in 4 Stunden Teil II bzw. in 5 Stunden Teil III zudosiert. Nach einer weiteren Stunde Rühren wird Teil IV zugegeben, dann noch eine Stunde gerührt und gegebenenfalls andestilliert. Die Reaktionstemperaturen und die Zusammensetzung der Teile I bis IV sind in der Tabelle 1, zusammen mit Festgehalt und Viskosität der Copolymerisatlösungen, angeführt.

Das Anhydrid-/Epoxidäquivalentgewicht der Copolymerisatlösungen wurde rechnerisch ermittelt.

Unter dem Gesamtäquivalentgewicht der Copolymerisatlösung ist die Menge an Copolymerisatlösung zu verstehen, die ein Mol reaktive Gruppen (d.h. Anhydrid- und Epoxidgruppen) enthält.

Tabelle 1 (Mengenangaben in g)

| | $A_1$ | $A_2$ | $A_3$ | $A_4$ | $A_5$ | $A_6$ | $A_7$ | $A_8$ |
|---|---|---|---|---|---|---|---|---|
| **Teil I** | | | | | | | | |
| Butylacetat | 2456 | 1534 | 1531 | 1531 | 2034 | 2034 | 2034 | 2034 |
| **Teil II** | | | | | | | | |
| MSA | 230 | 120 | 90 | 60 | 320 | 240 | 160 | 80 |
| Styrol | 276 | 180 | 90 | 90 | 320 | 160 | 120 | |
| Methylmethacrylat | 1104 | 780 | 750 | 750 | 400 | 600 | 760 | 1200 |
| Butylacrylat | 460 | 300 | 480 | 450 | 880 | 780 | 800 | |
| Vinylacetat | | | | | | | | 80 |
| Ethylacrylat | | | | | | | | 120 |
| 2-Ethylhexylacrylat | | | | | | | | 400 |
| Glycidylmethacrylat | 230 | 120 | 90 | 150 | 80 | 320 | 160 | 120 |
| **Teil III** | | | | | | | | |
| tert.-Butylperoktoat[1)] | 148 | 86 | 75 | 75 | 86 | 86 | 86 | 86 |

Tabelle 1 (Fortsetzung)

| | $A_1$ | $A_2$ | $A_3$ | $A_4$ | $A_5$ | $A_6$ | $A_7$ | $A_8$ |
|---|---|---|---|---|---|---|---|---|
| Teil IV | | | | | | | | |
| tert.-Butylperoktoat[1)] | 7 | | 4 | 4 | | | | |
| Reaktionstemperatur (°C) | 125 | 120 | 120 | 120 | 122 | 120 | 120 | 120 |
| Festgehalt (gegebenenfalls nach Andestillieren) (%) | 56,0 | 50,0 | 50,0 | 50,9 | 50,1 | 49,8 | 49,6 | 49,5 |
| Viskosität (mPa.s, bei 23°C) | 1390 | 893 | 450 | 481 | 673 | 558 | 268 | 560 |
| Epoxid-Äquivalentgewicht der Copolymerisatlösung (g) | 2657 | 3697 | 4914 | 2893 | 7311 | 1925 | 3686 | 4927 |
| Anhydrid-Äquivalentgewicht (g) | 1833 | 2548 | 3390 | 4990 | 1259 | 1809 | 2552 | 5203 |
| Gesamtäquivalentgewicht (g) | 1038 | 1460 | 1941 | 2396 | 1108 | 865 | 1478 | 2443 |

1) tert.-Butylperoktoat wird 70 %ig, gelöst in einem Kohlenwasserstoffgemisch, eingesetzt.

II. Herstellung der zur Vernetzung befähigten Komponenten B

$B_1$

In einem 2-l-Reaktionsgefäß mit Rühr-, Kühl- und Heizvorrichtung werden unter $N_2$-Atmosphäre 513 g Cyclohexan und 456 g Isobutyraldehyd vorgelegt. Bei 10 °C (Eisbadkühlung) werden dann 529,8 g 1-Amino-3-methyl-aminopropan zugetropft, 1 Std. bei 10 °C gerührt und auf Rückflußtemperatur erhitzt bis kein Wasser mehr abgespalten wird. Anschließend werden Cyclohexan und überschüssiger Isobutyraldehyd abdestilliert und der Hexahydropyrimidinvernetzer $B_1$ erhalten.

$B_2$

In einem 1-l-Reaktionsgefäß mit Rühr-, Kühl- und Heizvorrichtung werden unter $N_2$-Atmosphäre 200 g 1,12-Diaminododecan, 105 g Cyclohexan, 220 g Methylisobutylketon und 0,42 g para-Toluolsulfonsäure eingewogen und solange auf Rückflußtemperatur erhitzt, bis kein Wasser mehr abgeschieden wird. Anschließend wird überschüssiges Methylisobutylketon und das Cyclohexan im Wasserstrahlvakuum abdestilliert. Man erhält ein Bisketimin, den Vernetzer $B_2$.

$B_3$

a) In ein 3-l-Reaktionsgefäß mit Rühr-, Kühl- und Heizvorrichtung werden unter $N_2$-Atmosphäre 1050 g Diethanolamin und 460 g Cyclohexan vorgelegt. Bei Raumtemperatur werden dann 792 g Isobutyraldehyd zugetropft, wobei die Temperatur langsam ansteigt. Es wird solange bei Rückflußtemperatur gehalten bis die Wasserabspaltung beendet ist und dann Cyclohexan und überschüssiger Aldehyd abdestilliert. Man erhält ein Oxazolan, die Vorstufe $B_{3\ a)}$.

b) In einem 2-l-Reaktionsgefäß mit Rühr-, Kühl-und Heizvorrichtung werden unter $N_2$-Atmosphäre 515 g Diethylentriamin und 327 g Cyclohexan vorgelegt. Nach dem Zutropfen von 792 g Isobutyraldehyd wird solange auf Rückflußtemperatur gehalten, bis die Wasserabspaltung beendet ist. Cyclohexan und überschüssiger Aldehyd werden abdestilliert und ein Bisaldimin, die Vorstufe $B_{3\ b)}$ erhalten.

Herstellung von $B_3$:

In einem 2-l-Reaktionsgefäß werden unter $N_2$-Atmosphäre 420 g Hexamethylendiisocyanat (1 Mol) und 482,5 g Diethylenglykoldimethylether vorgelegt und auf 60 °C erwärmt. Dann werden 441,5 g Vorstufe $B_{3\ a)}$ (1 Mol) zugetropft und noch 30 Minuten bei 70 °C gerührt. Anschließend werden 586 g (1 Mol) Vorstufe $B_{3\ b)}$ zugetropft und noch 6 Stunden bei 70 °C gerührt. Man erhält eine etwa 75 %ige Lösung des im statistischen Mittel 1 Oxazolan- und 2 Aldimingruppen enthaltenden Vernetzers $B_3$.

$B_4$

In einem 0,5-l-Reaktionsgefäß werden unter $N_2$-Atmosphäre 126 g eines Bisepoxids (Diepoxid 126, Degussa AG) mit dem Äquivalentgewicht 126 und 69,6 g Toluol vorgelegt und auf 50 °C erwärmt. Dann werden 73 g n-Butylamin zugetropft, auf 110 °C aufgeheizt und 3 h gerührt. Nach dem Abkühlen auf 50 °C werden 79 g Isobutyraldehyd zugetropft und das Reaktionsgemisch solange auf Rückflußtemperatur erhitzt, bis kein Wasser mehr abgespalten wird. Man erhält eine etwa 80 %ige Lösung des Bisoxazolans, den Vernetzer $B_4$.

$B_5$

a) In einem 5-l-Reaktionsgefäß mit Wasserabscheider, Rückflußkühler, Heiz- und Rühreinrichtung werden unter $N_2$-Atmosphäre 1348 g Hexahydrophthalsäureanhydrid, 1757 g Trimethylolpropan und 1673 g einer gesättigten Fettsäure (®Prifac 9600, Unichema) eingewogen, in 8 h auf 220 °C aufgeheizt und solange gerührt bis die Säurezahl $\leqq$ 3,5 beträgt. Man erhält die hydroxylgruppenhaltige Polyestervorstufe $B_{5\ a)}$.

b) In einem 1-l-Reaktionsgefäß mit Rühr-, Kühl- und Heizvorrichtung werden 244 g 2-Aminoethanol und 140 g Cyclohexan vorgelegt und dann 316,8 g Isobutyraldehyd zugetropft. Es wird solange am Rückfluß erhitzt, bis die Wasserabscheidung beendet ist. Anschließend wird das Produkt destillativ gereinigt, man erhält das Oxazolan $B_{5\ b)}$ als Vorstufe.

Herstellung von $B_5$:

In einem 1-l-Reaktionsgefäß mit Rühr-, Kühl- und Heizvorrichtung werden 200 g Polyestervorstufe $B_{5\ a)}$, 41,4 g Oxazolan $B_{5\ b)}$, 57,3 g Oxazolan $B_{3\ a)}$ und 200 g Butylacetat vorgelegt und auf 60°C erwärmt. Nach dem Zutropfen von 108,6 g Hexamethylendiisocyanat wird noch 6 Stunden bei 60°C gerührt. Man erhält den polymeren Vernetzer $B_5$ als etwa 65 %ige Lösung.

$B_6$

In einem 0,5 l-Reaktionsgefäß mit Rühr-, Kühl- und Heizvorrichtung werden unter $N_2$-Atmosphäre 74,7 g Vernetzer $B_{1)}$, 88,3 g Vorstufe $B_{3\ a)}$ und 247 g Butylacetat vorgelegt und auf 60°C erwärmt. Nach dem Zutropfen von 84 g Hexamethylendiisocyanat wird noch 11 Stunden bei 70°C gerührt. Man erhält den etwa 50 %igen Vernetzer $B_6$, welcher im statistischen Mittel eine Oxazolan- und eine Hexahydropyrimidingruppe enthält.

$B_7$

In einem Reaktionsgefäß mit Rühr-, Kühl- und Heizvorrichtung werden unter $N_2$-Atmosphäre 200,6 g Isocyanuratgruppen aufweisenden Polyisocyanats auf Basis von Hexamethylendiisocyanat, welches im wesentlichen aus N,N′,N″-Tris-(6-isocyanatohexyl)-isocyanurat besteht und 507,3 g Methoxypropylacetat vorgelegt und auf 60°C erwärmt. Nach dem Zutropfen von 286,7 g eines auf 1 Mol Diethanolamin und 1 Mol 2-Ethylhexanal hergestellten Oxazolans wird noch 11 Stunden bei 70°C gehalten. Man erhält eine 50 %ige Lösung des im statistischen Mittel 3 Oxazolangruppen enthaltenden Vernetzers $B_7$.

$B_8$

In einem 2-l-Reaktionsgefäß mit Rühr-, Kühl- und Heizvorrichtung werden 400 g eines aliphatischen Polyisocyanats mit Biuretgruppen auf Basis von Hexamethylendiisocyanat (®Desmodur N 100, Bayer AG) und 397 g Methoxypropylacetat vorgelegt. Nach dem Zutropfen von 526,1 g des in $B_7$ beschriebenen Oxazolans aus Diethanolamin und 2-Ethylhexanal wird noch 11 Stunden bei 70°C gehalten. Man erhält eine etwa 70 %ige Lösung des im statistischen Mittel 3 Oxazolangruppen enthaltenden Vernetzers $B_8$.

$B_9$

a) In einem für eine Veresterung geeigneten Reaktionsgefäß werden unter $N_2$-Atmosphäre 296 g Phthalsäureanhydrid, 324 g Cyclohexandimethanol und 52 g Neopentylglykol eingewogen, in 8 Stunden auf 220°C aufgeheizt und solange Wasser abgeschieden, bis die Säurezahl $\leqq$ 2,5 beträgt. Man erhält die Polyestervorstufe $B_{9\ a)}$.

Herstellung von $B_9$:

In einem 1-l-Reaktionsgefäß mit Rühr-, Kühl- und Heizvorrichtung werden 145,2 g des in Vernetzer $B_7$ beschriebenen Polyisocyanats und 113,4 g Methoxypropylacetat eingewogen und auf 60°C aufgeheizt. Anschließend werden 119,5 g der Oxazolanvorstufe aus Diethanolamin und 2-Ethylhexanal zugetropft und dann 3 Stunden bei 70°C gerührt. Nach Zugabe von 318,4 g Polyestervorstufe $B_{9\ a)}$ wird noch 11 Stunden bei 70°C gehalten und so der Vernetzer $B_9$, ein Polyoxazolan auf Polyesterbasis als 70 %ige Lösung erhalten.

$B_{10}$

In einem 0,5-l-Reaktionsgefäß mit Rühr-, Kühl- und Heizvorrichtung werden unter $N_2$-Atmosphäre 114 g des bei der Herstellung des Vernetzers $B_8$ beschriebenen Polyisocyanats, 84,4 g Methoxypropylacetat und 0,08 g eines Katalysators auf Zinnbasis (Desmorapid SO, Bayer AG) vorgelegt und auf 60°C erwärmt. Dann werden 42,4 g eines Umsetzungsproduktes aus 2 Mol epsilon-Caprolacton und 1 Mol Bis-hydroxymethyl-hexahydro-4,7-methano-indan zugetropft, 2 Stunden bei 60°C gerührt, 25,8 g Methoxypropylacetat und 100,3 g der Oxazolanvorstufe aus Diethanolamin und 2-Ethylhexanal zugegeben und weitere 11 Stunden gerührt. Man erhält eine etwa 70 %ige Lösung eines im statistischen Mittel 4 Oxazolangruppen enthaltenden Vernetzers $B_{10}$.

$B_{11}$

In einem 6-l-Reaktionsgefäß mit Rühr-, Kühl- und Heizvorrichtung werden unter $N_2$-Atmosphäre 2069 g Methoxypropylacetat vorgelegt und auf 140 °C erhitzt. In 3,5 Stunden wird eine Monomermischung aus 500 g Hydroxypropylmethacrylat, 700 g Methylmethacrylat und 800 g n-Butylacrylat und in 4,5 Stunden 171 g einer 70 %igen Lösung von tert.-Butylperoktoat in einem Kohlenwasserstoffgemisch zugetropft und noch 2 Stunden nachgerührt. Man erhält eine etwa 50 %ige Lösung eines Hydroxylgruppen tragenden Acrylatcopolymerisats. 500 g dieser Copolymerisatlösung, 0,2 g eines Katalysators auf Zinnbasis (®Desmorapid SO, Bayer AG) und 96,3 g der Oxazolanvorstufe $B_{3\ a)}$ werden unter $N_2$-Atmosphäre in einem 1-l-Reaktionsgefäß mit Rühr-, Kühl- und Heizvorrichtung vorgelegt, auf 100 °C aufgeheizt, 84,9 g Isophorondiisocyanat zugetropft und 6 Stunden gerührt. Man erhält eine etwa 62 %ige Lösung eines Polyoxazolans auf Copolymerisatbasis.

III. <u>Herstellung der erfindungsgemäßen Bindemittelkombinationen</u>

Die Copolymerisate A), Vernetzer B) und gegebenenfalls Komponenten C), D) und E) werden bei Raumtemperatur miteinander vermischt und gegebenenfalls durch Zugabe eines organischen Lösungs- bzw. Verdünnungsmittels auf eine verarbeitungsfähige Viskosität eingestellt. Die Filme werden mit einem Filmzieher auf Glasplatten bzw. entfettetem Stahlblech aufgezogen, wobei die Filmstärke der Naßfilme 150 bis 180 µm beträgt. Nach Alterung, d.h. 16 bis 20 Stunden Trockung bei Raumtemperatur erhält man vernetzte Filme mit sehr guter Filmmechanik. Verschiedene Bindemittelkombinationen wurden bei 80 °C 30 Minuten forciert getrocknet und nach 1 Stunde Abkühlzeit abgemustert.

Die angegebenen Lösungsmittelfestigkeiten wurden durch einen Wischtest mittels eines mit Aceton bzw. Superbenzin getränkten Wattbausches geprüft. Angegeben wird die Zahl der Doppelhübe, nach denen der Film ohne sichtbare Veränderung bleibt.

Kombination K 1:

Abgemischt wurden 86,5 g (0,1 Äquiv.) $A_6$ und 79,7 g (0,1 Äquiv.) $B_7$, mit Methoxypropylacetat auf 40 % Festgehalt verdünnt und ein Film auf eine Glasplatte aufgezogen. Der Film trocknete klar und farblos und war nach 45 Minuten klebfrei. Ein Wischtest nach 16 Stunden Trocknung bei Raumtemperatur mit Aceton bzw. Superbenzin (jeweils 200 Doppelhübe) ergab keinen Befund. Ein Wassertropftest ergab nach 8 Stunden Belastung keine sichtbare Veränderung.

K 2:

Abgemischt wurden 110,8 g (0,1 Äquiv.) $A_6$ und 71,7 g (0,09 Äquiv.) $B_7$, mit Methoxypropylacetat auf 40 % Festgehalt verdünnt und ein Film auf eine Glasplatte aufgezogen. Der Film trocknete klar und farblos auf und ergab die gleichen Ergebnisse bezüglich Lösungsmittel-bzw. Wasserbeständigkeit wie K 1.

K 3:

Abgemischt wurden 70 g (0,047 Äquiv.) $A_7$ und 11,2 g (0,042 Äquiv.) $B_3$, mit Methoxypropylacetat auf 40 % Festgehalt verdünnt und ein Film auf eine Glasplatte aufgezogen. Der Film trocknete klar und farblos und war nach 30 Minuten klebfrei trocken. Nach 16 Stunden Trocknung bei Raumtemperatur ergab ein Wischtest mit Superbenzin (200 Doppelhübe) keinen negativen Befund. Ein Wassertropfentest ergab nach 6 Stunden keinen Befund.

K 4:

Abgemischt wurden 60 g (0,04 Äquiv.) $A_7$ und 19 g (0,04 Äquiv.) $B_6$, mit Methoxypropylacetat auf 40 % Festgehalt verdünnt und ein Film auf eine Glasplatte aufgezogen. Der Film trocknete klar und farblos und war nach 45 Minuten klebfrei trocken. Nach 16 Stunden Trocknung bei Raumtemperatur ergab eine Wischtest mit Superbenzin (200 Doppelhübe) keinen negativen Befund. Ein Wassertropfentest ergab nach 8 Stunden eine leichte, reversible Trübung des Films.

K 5:

Abgemischt wurden 70 g (0,047 Äquiv.) $A_7$ und 4,6 g (0,064 Äquiv.) $B_1$, mit Methoxypropylacetat auf 40 % Festgehalt verdünnt und ein Film auf eine Glasplatte aufgezogen. Der Film trocknete klar und farblos auf und war nach 45 Minuten klebfrei trocken. Ein Wischtest mit Superbenzin nach 16 Stunden Trocknung bei Raumtemperatur (150 Doppelhübe) ergab keinen negativen Befund.

K 6:

Abgemischt wurden 70 g (0,047 Äquiv.) $A_7$ und 9,4 g (0,051 Äquiv.) $B_2$, mit Methoxypropylacetat auf 40 % Festgehalt verdünnt und ein Film auf eine Glasplatte aufgezogen. Der Film trocknete klar und farblos auf und war nach 45 Minuten klebfrei trocken. Ein Wischtest mit Superbenzin (200 Doppelhübe) nach 20 Stunden Trocknung bei Raumtemperatur ergab ebenso wie eine 8-stündiger Wassertropfentest keinen negativen Befund.

K 7:

Abgemischt wurden 86,5 g (0,1 Äquiv.) $A_6$ und 114,8 g (0,1 Äquiv.) $B_{11}$, mit Methoxypropylacetat auf 40 % Festgehalt verdünnt und ein Film auf eine Glasplatte aufgezogen. Der Film trocknete klar und farblos auf und war nach 60 Minuten klebfrei trocken. Ein Wischtest mit Aceton (150 Doppelhübe) ergab nach 16 Stunden Trocknung bei Raumtemperatur ebenso wie ein Wassertropftest (8 Stunden) keinen negativen Befund.

K 8:

Abgemischt wurden 239,6 g (0,1 Äquiv.) $A_4$, 28,5 g (0,05 Äquiv.) $B_8$, 10,6 g (0,025 Äquiv.) eines hydroxylfunktionellen Umsetzungsproduktes aus 1 Mol Bis-hydroxymethyl-hexahydro-4,7-methano-indan und 2 Mol Caprolacton, sowie 1,4 g Dimethylethanolamin, auf 40 % Festgehalt mit Methoxypropylacetat verdünnt und ein Film auf eine Glasplatte aufgezogen. Der Film trocknete klar und farblos auf und war nach etwa 60 Minuten klebfrei trocken. Ein Wischtest mit Aceton (200 Doppelhübe) ergab nach 16 Stunden Trocknung bei Raumtemperatur ebenso wie ein Wassertropfentest (8 Stunden) keinen negativen Befund.

K 9:

Abgemischt wurden 194,1 g (0,1 Äquiv.) $A_3$ und 56,9 g (0,1 Äquiv.) $B_8$, mit Methoxypropylacetat auf 45 % und dann mit n-Pentanol auf 40 % Festgehalt verdünnt und ein Film auf ein entfettetes Stahlblech appliziert. Der Film trocknete klar und farblos auf und war nach etwa 30 Minuten klebfrei trocken. Ein Wischtest mit Superbenzin (200 Doppelhübe) ergab nach 16 Stunden Trocknung bei Raumtemperatur ebenso wie ein Wassertropfentest (8 Stunden) keinen negativen Befund.

K 10:

Abgemischt wurden 244,3 g (0,1 Äquiv.) $A_6$ und 68,8 g (0,08 Äquiv.) $B_7$, mit Methoxypropylacetat auf 40 % Festgehalt verdünnt und dann ein Film auf Glasplatten aufgezogen. Der Film trocknete klar und farblos auf und war nach etwa 30 Minuten klebfrei trocken. Ein Wischtest mit Superbenzin (150 Doppelhübe) nach 16 Stunden Trocknung bei Raumtemperatur ergab keinen negativen Befund.

K 11:

Abgemischt wurden 103,8 g (0,1 Äquiv.) $A_1$, 42,2 g (0,09 Äquiv.) $B_6$ und 4,0 g ungesättigter $C_{18}$-Fettalkohol (®Ocenol 110/130, Fa. Henkel), mit Methoxypropylacetat auf 40 % Festgehalt verdünnt und auf entfettetes Stahlblech aufgetragen. Nach 30 Minuten Trocknung bei 80 °C erhielt man einen klaren, farblosen Film, der einen Wischtest mit Aceton (200 Doppelhübe) und einen Wassertropfentest (8 Stunden) ohne negativen Befund überstand.

K 12:

Abgemischt wurden 50 g (0,034 Äquiv.) $A_7$, 31,6 g (0,036 Äquiv.) $B_5$ und 0,25 g Dimethylethanolamin. Die Mischung wurde mit Butylacetat auf einen Festgehalt von 40 % verdünnt und ein Film auf eine Glasplatte aufgezogen. Der Film trocknete in 60 Minuten klar und farblos klebfrei auf. Ein Wischtest mit Superbenzin (150 Doppelhübe) blieb ebenso wie ein Wassertropfentest (8 Stunden) nach 16 Stunden Trocknung bei Raumtemperatur ohne negativen Befund.

K 13:

146,6 g (0,10 Äquiv.) $A_2$ und 89,9 g (0,06 Äquiv.) $B_9$ wurden abgemischt, mit Methoxypropylacetat auf 40 % Festgehalt verdünnt und auf ein entfettetes Stahlblech appliziert. Nach 30 Minuten Trocknung bei 80 °C erhielt man einen klaren, farblosen Film der sowohl einen Wischtest mit Aceton (100 Doppelhübe) als auch eine Wassertropfentest (8 Stunden) ohne Befund überstand.

K 14:

103,8 g (0,1 Äquiv.) $A_1$ und 19,9 g (0,08 Äquiv.) $B_4$ wurden abgemischt und mit Methoxypropylacetat auf 40 % Festgehalt verdünnt. Der auf ein entfettetes Stahlblech applizierte Film trocknete in 45 Minuten klar und farblos klebfrei auf. Ein Wischtest mit Aceton (200 Doppelhübe) bzw. ein Wassertest (8 Stunden) nach 20 Stunden Trockung bei Raumtemperatur verlief ohne negativen Befund.

K 15:

103,8 g (0,1 Äquiv.) $A_1$ und 78,7 g (0,1 Äquiv.) $B_{10}$ werden abgemischt und mit N-Methylpyrrolidon auf 40 % Festgehalt verdünnt. Ein auf ein entfettetes Stahlblech applizierter Film wurde bei 80 °C 30 Minuten forciert getrocknet. Ein anschließend durchgeführter Wischtest mit Aceton (200 Doppelhübe) verlief ebenso wie ein Wassertropfentest (8 Stunden) ohne negativen Befund.

K 16:

Abgemischt werden 103,8 g (0,1 Äquiv.) $A_1$, 28,4 g (0,05 Äquiv.) $B_8$, 15,0 g (0,01 Äquiv.) $B_9$ und 1,0 g Dimethylethanolamin. Nach dem Verdünnen auf einen Festgehalt von 40 % wurde ein Film auf ein entfettetes Stahlblech appliziert und 30 Minuten bei 80 °C getrocknet. Ein Wischtest mit Aceton (150 Doppelhübe) verlief ebenso wie ein Wassertropfentest (8 Stunden) ohne Befund.

K 17:

Abgemischt werden 103,8 g (0,1 Äquiv.) $A_1$, 28,4 g (0,05 Äquiv.) $B_8$, 16,0 g n-Hexanol und 0,5 g 1,8-Diazabicyclo-(5,4,0)-undec-7-en (DBU). Nach dem Verdünnen mit Methoxypropylacetat auf 40 % Festgehalt wurde ein Film auf ein entfettetes Stahlblech appliziert, welcher in 60 Minuten klar, farblos und klebfrei auftrocknete. Nach 20 Stunden Härtung bei Raumtemperatur ergab ein Acetonwischtest (200 Doppelhübe) und ein Wassertropfentest (8 Stunden) keinen negativen Befund.

## Patentansprüche

**1.** Unter dem Einfluß von Feuchtigkeit aushärtbare Bindemittelkombinationen enthaltend

A) 30 bis 99 Gew.-Teile einer Copolymerisat-Komponente, bestehend aus mindestens einem Copolymerisat von olefinisch ungesättigten Verbindungen mit einem als Gewichtsmittel bestimmten Molekulargewicht von 1.500 bis 75.000, welches gegenüber Aminogruppen im Sinne einer Additionsreaktion reaktionsfähige Gruppen chemisch eingebaut enthält,

und

B) 1 bis 70 Gew.-Teile einer Polyamin-Komponente, bestehend aus mindestens einem organischen Polyamin mit blockierten Aminogruppen, dadurch gekennzeichnet, daß die Copolymerisate der Komponente A) sowohl intramolekulare Carbonsäureanhydridgruppen als auch Epoxidgruppen in chemisch gebundener Form enthalten, wobei das Anhydridäquivalentgewicht der Copolymerisate bei 392 bis 9,800 und das Epoxidäquivalentgewicht der Copolymerisate bei 568 bis 14.200 liegt, und wobei in den Bindemittelkombinationen auf jede blockierte Aminogruppe insgesamt 0,2 bis 8

Anhydrid- und Epoxidgruppen entfallen.

**2.** Bindemittelkombinationen gemäß Anspruch 1, dadurch gekennzeichnet, daß die Copolymerisate der Komponente A) durch radikalisch initiierte Copolymerisation erhaltene Copolymerisate aus
   a) 1 bis 25 Gew.-Teilen copolymerisierbaren, anhydridfunktionellen Monomeren,
   b) 1 bis 25 Gew.-Teilen copolymerisierbaren, epoxidfunktionellen Monomeren, sowie
   c) 50 bis 98 Gew.-Teilen sonstigen copolymerisierbaren Monomeren der allgemeinen Formeln I, II, III

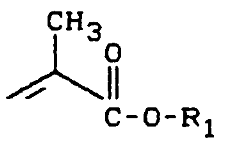
,
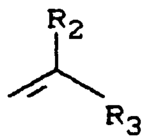
,
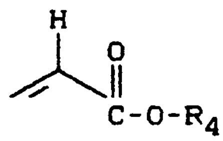
,

I II III

darstellen, wobei
- $R_1$ für einen linearen oder verzweigten aliphatischen Kohlenwasserstoffrest mit 1 bis 18 Kohlenstoffatomen steht,
- $R_2$ für Wasserstoff, eine Methyl-, Ethyl-, Chlor-oder Fluorgruppe steht,
- $R_3$ für einen aromatischen Kohlenwasserstoffrest mit 6 bis 12 Kohlenstoffatomen (hierunter sollen auch aliphatische Substituenten aufweisende aromatische Reste verstanden werden), eine Nitrilgruppe, eine Carboxylatgruppe mit 2 bis 9 Kohlenstoffatomen, eine Alkoxygruppe mit 2 bis 7 Kohlenstoffatomen oder eine Aminocarbonylgruppe, die gegebenenfalls am Stickstoff, gegebenenfalls Etherbrücken aufweisende, Alkylsubstituenten mit 1 bis 6 Kohlenstoffatomen tragen, steht, und
- $R_4$ bezüglich seiner Bedeutung der für $R_1$ gemachten Definition entspricht, jedoch mit $R_1$ nicht identisch sein muß.

**3.** Bindemittelkombinationen gemäß Anspruch 1 und 2, dadurch gekennzeichnet, daß in den Copolymerisaten der Komponente A) als anhydridfunktionelles Monomer Maleinsäureanhydrid in copolymerisierter Form vorliegt.

**4.** Bindemittelkombinationen gemäß Anspruch 1 bis 3, dadurch gekennzeichnet, daß in den Copolymerisaten der Komponente A) als epoxidfunktionelles Monomer Glycidyl(meth)acrylat in copolymerisierter Form vorliegt.

**5.** Bindemittelkombinationen gemäß Anspruch 1 bis 4, dadurch gekennzeichnet, daß die Komponente B) aus Aldimin-, Ketimin-, Oxazolan-, Hexahydropyrimidin- und/oder Tetrahydroimidazolgruppen aufweisenden Verbindungen besteht.

**6.** Bindemittelkombinationen gemäß Anspruch 1 bis 5, dadurch gekennzeichnet, daß sie als weitere Komponenten
   C) ein- und/oder mehrwertige Alkohole
und/oder
   D) Katalysatoren
und/oder
   E) weitere Hilfs- und Zusatzmittel
enthalten.

**7.** Verfahren zur Herstellung von Bindemittelkombinationen gemäß Anspruch 1 bis 6, dadurch gekennzeichnet, daß man die Ausgangskomponenten A) und B), gegebenenfalls unter Hinzufügung der zusätzlichen Komponenten C), D) und/oder E), miteinander vermischt.

**8.** Verwendung der Bindemittelkombinationen gemäß Anspruch 1 bis 6 als oder in, unter dem Einfluß von Feuchtigkeit aushärtbaren, Beschichtungsmitteln und Dichtmassen.

## Claims

**1.** Moisture-curing binder combinations containing

A) 30 to 99 parts by weight of a copolymer component consisting of at least one copolymer of olefinically unsaturated compounds having a weight average molecular weight of 1,500 to 75,000 in which groups reactive to amino groups in an addition reaction are chemically incorporated,

and

B) 1 to 70 parts by weight of a polyamine component consisting of at least one organic polyamine containing blocked amino groups,

characterized in that the copolymers of component A) contain both intramolecular carboxylic anhydride groups and epoxide groups in chemically bound form, the anhydride equivalent weight of the copolymers being from 392 to 9,800 and the epoxide equivalent weight of the copolymers being from 568 to 14,200, the binder combinations containing a total of 0.2 to 8 anhydride and epoxide groups for every blocked amino group.

**2.** Binder combinations as claimed in claim 1, characterized in that the copolymers of component A) are copolymers - obtained by radical-initiated copolymerization - of

a) 1 to 25 parts by weight copolymerizable, anhydride-functional monomers,

b) 1 to 25 parts by weight copolymerizable, epoxide-functional monomers and

c) 50 to 98 parts by weight of other copolymerizable monomers corresponding to general formulae I, II and III

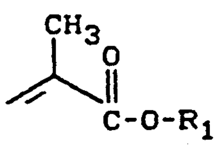 , 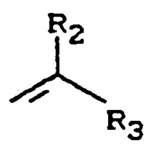 , 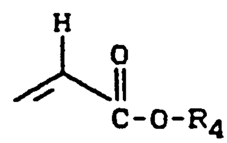 ,

I II III

in which

$R_1$ is a linear or branched aliphatic hydrocarbon radical containing 1 to 18 carbon atoms,

$R_2$ is hydrogen, a methyl, ethyl, chlorine or fluorine group,

$R_3$ is an aromatic hydrocarbon radical containing 6 to 12 carbon atoms (including aromatic radicals bearing aliphatic substituents), a nitrile group, a carboxylate group containing 2 to 9 carbon atoms, an alkoxy group containing 2 to 7 carbon atoms or an aminocarbonyl group optionally bearing $C_{1-6}$ alkyl substituents - optionally with ether bridges - at the nitrogen and

$R_4$ corresponds in its meaning to the definition of $R_1$, but does not have to be identical with $R_1$.

**3.** Binder combinations as claimed in claims 1 and 2, characterized in that maleic anhydride in copolymerized form is present as the anhydride-functional monomer in the copolymers of component A).

**4.** Binder combinations as claimed in claims 1 to 3, characterized in that glycidyl (meth)acrylate in copolymerized form is present as the epoxide-functional monomer in the copolymers of component A).

**5.** Binder combinations as claimed in claims 1 to 4, characterized in that component B) consists of compounds containing aldimine, ketimine, oxazolane, hexahydropyrimidine and/or tetrahydroimidazole groups.

**6.** Binder combinations as claimed in claims 1 to 5, characterized in that they contain

C) mono- and/or polyhydric alcohols

and/or

D) catalysts

and/or

E) other auxiliaries and additives

as further components.

7. A process for the production of the binder combinations claimed in claims 1 to 6, characterized in that the starting components A) and B) are mixed together, optionally in the presence of the additional components C), D) and/or E).

8. The use of the binder combinations claimed in claims 1 to 6 as or in moisture-curing coating compositions and sealing compounds.

**Revendications**

1. Combinaisons faisant office de liant, durcissables sous l'influence de l'humidité, contenant :
   A) de 30 à 99 parties en poids d'un composant de copolymère constitué par au moins un copolymère de composés à insaturation oléfinique ayant un poids moléculaire de 1.500 à 75.000, déterminé comme moyenne pondérale, qui contient des groupes incorporés par voie chimique aptes à réagir vis-à-vis de groupes amino dans le sens d'une réaction d'addition,
   et
   B) de 1 à 70 parties en poids d'un composant de polyamine, constitué par au moins une polyamine organique comprenant des groupes amino bloqués,

   caractérisées en ce que les copolymères du composant A) contiennent aussi bien des groupes intramoléculaires d'anhydrides d'acides carboxyliques que des groupes époxyde sous une forme liée par voie chimique, le poids d'équivalent anhydride des copolymères se situant de 392 à 9.800 et le poids d'équivalent époxyde des copolymères se situant de 568 à 14.200, et dans lesquelles, dans les combinaisons faisant office de liant, à chaque groupe amino bloqué, correspondent au total de 0,2 à 8 groupes anhydride et époxyde.

2. Combinaisons faisant office de liant selon la revendication 1, caractérisées en ce que les copolymères du composant A) représentent des copolymères obtenus par copolymérisation à initialisation radicalaire, constitués par
   a) de 1 à 25 parties en poids de monomères anhydride-fonctionnels copolymérisables,
   b) de 1 à 25 parties en poids de monomères époxy-fonctionnels copolymérisables et
   c) de 50 à 98 parties en poids d'autres monomères copolymérisables répondant aux formules générales

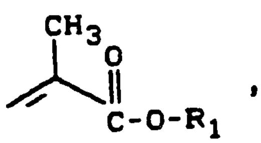 ,

I

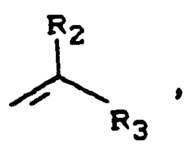 ,

II

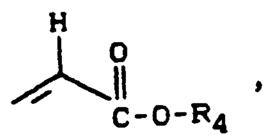 ,

III

   dans lesquelles
   - $R_1$ représente un radical d'hydrocarbure aliphatique linéaire ou ramifié contenant de 1 à 18 atomes de carbone,
   - $R_2$ représente un atome d'hydrogène, un groupe méthyle, un groupe éthyle, un atome de chlore ou un atome de fluor,
   - $R_3$ représente un radical d'hydrocarbure aromatique contenant de 6 à 12 atomes de carbone (sont considérés comme faisant partie de cette catégorie, également des radicaux aromatiques présentant des substituants aiiphatiques), un groupe nitrile, un groupe carboxylate contenant de 2 à 9 atomes de carbone, un groupe alcoxy contenant de 2 à 7 atomes de carbone ou encore un groupe aminocarbonyle qui porte éventuellement sur l'atome d'azote des substituants alkyle contenant de 1 à 6 atomes de carbone et présentant éventuellement des ponts d'éthers, et
   - $R_4$ correspond, quant à sa signification, à la définition donnée pour $R_1$, mais ne doit pas être identique à $R_1$.

3. Combinaisons faisant office de liant selon les revendications 1 et 2, caractérisées en ce que, dans les copolymères du composant A), à titre de monomère anhydride-fonctionnel, est présent de l'anhydride

maléique sous forme copolymérisée.

4. Combinaisons faisant office de liant selon les revendications 1 à 3, caractérisées en ce que, dans les copolymères du composant A), à titre de monomère époxyde-fonctionnel, est présent le (méth)acrylate de glycidyle sous forme copolymérisée.

5. Combinaisons faisant office de liant selon les revendications 1 à 4, caractérisées en ce que le composant B) est constitué par des composés présentant des groupes aldimine, cétimine, oxazolanne, hexahydropyrimidine et/ou tétrahydroimidazole.

6. Combinaisons faisant office de liant selon les revendications 1 à 5, caractérisées en ce qu'elles contiennent, comme composants supplémentaires
   C) des alcools mono- et/ou polyvalents
   et/ou
   D) des catalyseurs
   et/ou
   E) d'autres agents auxiliaires et d'autres additifs.

7. Procédé pour la préparation de combinaisons faisant office de liant selon les revendications 1 à 6, caractérisé en ce qu'on mélange l'un avec l'autre les composants de départ A) et B) éventuellement avec addition des composants supplémentaires C), D) et/ou E).

8. Utilisation des combinaisons faisant office de liant selon les revendications 1 à 6, comme agents d'enduction et matières d'étanchéification durcissables sous l'influence de l'humidité ou bien dans des agents d'enduction et des matières d'étanchéification durcissables sous l'influence de l'humidité.